(19) **Europäisches Patentamt / European Patent Office / Office européen des brevets**

(11) **EP 4 129 654 A1**

(12) **EUROPEAN PATENT APPLICATION**
published in accordance with Art. 153(4) EPC

(43) Date of publication:
**08.02.2023 Bulletin 2023/06**

(21) Application number: **21775915.8**

(22) Date of filing: **25.03.2021**

(51) International Patent Classification (IPC):
**B32B 27/00** (1968.09)       **C08J 5/18** (1974.07)
**H01G 4/18** (1974.07)       **H01G 4/32** (1974.07)
**B32B 7/02** (1968.09)       **B32B 7/027** (2019.01)
**C08J 7/04** (1974.07)

(52) Cooperative Patent Classification (CPC):
**B32B 7/02; B32B 7/027; B32B 27/00; C08J 5/18;**
**C08J 7/04; H01G 4/18; H01G 4/32;** Y02T 10/70

(86) International application number:
**PCT/JP2021/012638**

(87) International publication number:
**WO 2021/193844 (30.09.2021 Gazette 2021/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **27.03.2020 JP 2020057214**
**27.03.2020 JP 2020057215**

(71) Applicant: **Toray Industries, Inc.**
**Tokyo 103-8666 (JP)**

(72) Inventors:
• **TATSUKI, Toshiumi**
**Otsu-shi, Shiga 520-8558 (JP)**
• **OHKURA, Masatoshi**
**Otsu-shi, Shiga 520-8558 (JP)**

(74) Representative: **Mewburn Ellis LLP**
**Aurora Building**
**Counterslip**
**Bristol BS1 6BX (GB)**

(54) **FILM FOR FILM CAPACITOR, METAL LAYER LAMINATED FILM FOR FILM CAPACITOR, AND FILM CAPACITOR**

(57) The present invention addresses the problem of providing a film for a film capacitor that has high heat resistance, self-healing properties, and excellent productivity, wherein the film has a resin layer A having a melting point of 180°C or higher and/or a glass transition temperature of 130°C or higher and a layer B thinner than the resin layer A in at least the outermost layer of the film, the oxygen content of the layer B is 1.0% by mass or more, when a dynamic friction coefficient is measured on the same surface of two outermost layer surfaces, the surface having a higher dynamic friction coefficient is defined as an a-plane and the surface having a smaller dynamic friction coefficient is defined as a b-plane, and when a dynamic friction coefficient between the a-planes is defined as $\mu$daa, and a dynamic friction coefficient between the a-plane and the b-plane is defined as $\mu$dab, $\mu$daa>$\mu$dab and $\mu$dab≤1.2 are satisfied.

EP 4 129 654 A1

**Description**

TECHNICAL FIELD

The present invention relates to a film for a film capacitor designed to form a dielectric of a film capacitor, a metal layer laminated film for a film capacitor, and a film capacitor.

BACKGROUND ART

In recent years, as the markets for engine-motor hybrid vehicles such as hybrid electric vehicles (HEVs) and plug-in hybrid electric vehicles (PHEVs) and for motor-driven vehicles such as electric vehicles (EVs) and fuel cell vehicles (FCVs) are growing to provide solutions to global environmental problems etc., the demand for film capacitors intended for use in these vehicles is also increasing rapidly.

The film capacitor, which is a capacitor that contains a resin-made base film as a dielectric member, can be produced with excellent frequency characteristics and temperature stability. Examples of the base film of such a film capacitor include polypropylene (PP) resin film, polyester resin films such as polyethylene terephthalate (PET) resin film and polyethylene naphthalate (PEN) resin film, thermoplastic resin films such as polyphenylene sulfide (PPS) resin film, and amorphous thermoplastic resins such as polyetherimide (PEI) resin film.

Among these films, the polyetherimide resin film is attracting attention as material for a base film (Patent document 1). For use in an engine-motor hybrid vehicle or motor-driven vehicle, a film capacitor is required to have high heat resistance required to work in an environment at 120°C. In such cases, if base films made of polyetherimide resin having a glass transition temperature (Tg) of 200°C or more are used, they can realize excellent electrical characteristics such as heat resistance, withstand voltage characteristics, and dielectric characteristics.

On the other hand, base films having excellent heat resistance such as films of polyetherimide and polyphenylene sulfide generally have poor self-healing (SH) properties and have the disadvantage that the capacitor capacity decreases as they operate over a long period of time. As a solution to this, there is a known technique intended to improve the self-healing property of a base film by forming a coat layer thereon (Patent documents 2 and 3).

PRIOR ART DOCUMENTS

PATENT DOCUMENTS

Patent document 1: Japanese Unexamined Patent Publication (Kokai) No. 2007-300126
Patent document 2: Japanese Unexamined Patent Publication (Kokai) No. 2018-163950
Patent document 3: International Publication WO 2007/080757

SUMMARY OF INVENTION

PROBLEMS TO BE SOLVED BY THE INVENTION

The conventional techniques, however, are disadvantageous because, for example, they use a coat of polyparaxylylene based resin, which is expensive, requires a prolonged formation process with poor productivity, and fails in serving effectively to improve the self-healing property although able to achieve both heat resistance and self-healing property or because they use a silicone based self-healing coat that releases siloxane to cause defective conductors in electric circuits when dielectric breakdown occurs. Accordingly, in view of these conventional techniques as background, the main object of the present invention is to provide a film for a film capacitor that not only has high heat resistance and good self-healing property but also can be produced with high productivity.

MEANS OF SOLVING THE PROBLEMS

The aforementioned problem can be solved by two embodiments of the present invention described below.

The first embodiment of the film for a film capacitor according to the present invention is a film for a film capacitor including a resin layer A having a melting point of 180°C or higher and/or a glass transition temperature of 130°C or higher and a layer B having a thickness smaller than that of the resin layer A and disposed at least as either of the outermost layers of the film, wherein the layer B has an oxygen atom content of 1.0% by mass or more and both of the relations $\mu$daa > $\mu$dab and $\mu$dab $\leq$ 1.2 hold where $\mu$daa is the dynamic friction coefficient between either of the two outermost layer surfaces, referred to as the type-a surface, of a film and the same type of outermost layer surface, i.e. the type-a surface, of another film that is larger than the dynamic friction coefficient between the other outermost layer surface, referred to as the type-b surface, of the former film and the other outermost layer surface, i.e. the type-b surface, of the other film and μdab is the dynamic friction coefficient measured between the type-a surface and the type-b surface.

The second embodiment of the film for a film capacitor according to the present invention is a film for a film capacitor including a resin layer A having a melting point of 180°C or higher and/or a glass transition temperature of 130°C or higher and a layer B having a thickness smaller than that of the resin layer A and disposed at least as either of the outermost layers of the film, wherein the layer B has an oxygen atom content of 1.0% by mass or more.

ADVANTAGEOUS EFFECTS OF THE INVENTION

The present invention can provide a film for a film capacitor that not only has high heat resistance and good self-healing property but also can be produced with high productivity.

DESCRIPTION OF PREFERRED EMBODIMENTS

The first embodiment of the film for a film capacitor according to the present invention includes a resin layer A having a melting point of 180°C or higher and/or a glass transition temperature of 130°C or higher and a layer B having a thickness smaller than that of the resin layer A and disposed at least as either of the outermost layers of the film, wherein the resin layer B has an oxygen atom content of 1.0% by mass or more and both of the relations μdaa > μdab and μdab ≤ 1.2 hold where μdaa is the dynamic friction coefficient between either of the two outermost layer surfaces, referred to as the type-a surface, of a film and the same type of outermost layer surface, i.e. the type-a surface, of another film that is larger than the dynam ic friction coefficient between the other outermost layer surface, referred to as the type-b surface, of the former film and the other outermost layer surface, i.e. the type-b surface, of the other film and μdab is the dynamic friction coefficient measured between the type-a surface and the type-b surface.

The second embodiment of the film for a film capacitor according to the present invention includes a resin layer A having a melting point of 180°C or higher and/or a glass transition temperature of 130°C or higher and a layer B having a thickness smaller than that of the resin layer A and disposed at least as either of the outermost layers of the film, wherein the layer B has an oxygen atom content of 1.0% by mass or more.

Hereinafter, the first embodiment of the film for a film capacitor according to the present invention and the second embodiment of the film for a film capacitor according to the present invention will be occasionally referred to collectively as a film for a film capacitor according to the present invention. The film for a film capacitor according to the present invention is described more specifically below.

The film for a film capacitor according to the present invention includes a resin layer A that has a melting point of 180°C or higher and/or a glass transition temperature of 130°C or higher. The lower limit of the melting point of the resin layer A is preferably 205°C and more preferably 215°C, and the upper limit is not particularly limited, but is preferably 400°C and more preferably 350°C. The lower limit of the glass transition temperature of the resin layer A is preferably 180°C and more preferably 205°C, and the upper limit is not particularly limited, but is preferably 400°C and more preferably 350°C. If the melting point and/or the glass transition temperature of the resin layer A are in the above ranges, the film for a film capacitor will not suffer frequent insulation failure caused by heat shrinkage or film breakage while it is used in a high temperature environment at 120°C or higher.

There are no specific limitations on the thickness of the resin layer A according to the present invention, but it is preferably 100 μm or less and more preferably 10 μm or less. If the thickness of the resin layer A is 100 μm or less, it will be easy to produce a capacitor element with a smaller volume. There are no specific limitations on the lower limit of the thickness of the resin layer A, but it is preferably 0.50 μm, more preferably 1.3 μm, and still more preferably 1.6 μm. If the thickness of the resin layer A is 0.50 μm or more, it will be easy to realize a high dielectric breakdown voltage.

For the film for a film capacitor according to the present invention, there are no specific limitations on the material to use for the resin layer A, but useful ones include, for example, polyolefin resins such as polystyrene (PS) resin, polymethylpentene (PMP) resin, cyclic olefin (COP) resin, and cyclic olefin copolymer (COC) resin; polyester resins such as polyethylene terephthalate (PET) resin, polybutylene terephthalate (PBT) resin, and polyethylene naphthalate (PEN) resin; polyamide resins such as polyamide 6 (PA6) resin, polyamide 66 (PA66) resin, polyamide 46 (PA46) resin, polyamide 4T (PA4T) resin, polyamide 6T (PA6T) resin, modified polyamide 6T (modified PA 6T) resin, polyamide 9T (PA9T) resin, polyamide 10T (PA10T) resin, and polyamide 11T (PA11T) resin; polysulfone resins such as polysulfone (PSU) resin, polyethersulfone (PES) resin, and polyphenyl sulfone (PPSU) resin; polyarylene sulfide resins such as polyphenylene sulfide (PPS) resin, polyphenylene sulfide ketone resin, polyphenylene sulfide sulfone resin, and polyphenylene sulfide ketone sulfone resin; polyimide (PI) resins such as polyimide (PI) resin, polyetherimide (PEI) resin, and polyamide-imide (PAI) resin; polyaryl ether ketone resins such as polyether ketone (PEK) resin, polyether ether ketone (PEEK) resin, polyether ketone ketone (PEKK) resin, polyether ether ketone ketone (PEEKK) resin, polyether ketone ether ketone ketone (PEKEKK) resin; fluorine resins such as polytetrafluoroethylene (PTFE) resin (also called tetrafluoroethylene resin), polytetrafluoroethylene-perfluoroalkylvinyl ether copolymer (PFA) resin (also called tetrafluoroethylene-perfluoroalkylvinyl ether copolymer resin), tetrafluoroethylene-hexafluoropropylene copolymer (FEP) resin (also called tetrafluoroethylene-hexafluoropropylene copolymer resin), tetrafluoroethylene-ethylene copolymer (ETFE) resin (also called tetrafluoroethylene-ethylene copolymer resin), polychlorotrifluoroethylene (PCTFE) resin (also called polychlorotrifluoroethylene resin), polyvinylidene fluoride (PVDE) resin (also called polyvinylidene fluoride resin), polyvinylidene fluoride-tetrafluoroethylene-hexafluoropyrene copolymer resin; and others such as polyacetal resin, liquid crystal polymer (LCP) resin, polycarbonate (PC) resin, polyallylate (PAR) resin, phenol resin, polyurea resin, melamine resin, epoxy resin, and alkyd resin. Of these, preferable ones include polysulfone resins such as polyetherimide resin, polycarbonate resin, polyphenylene sulfide resin, polyethersulfone resin, and polyphenyl sulfone resin, and others such as polyimide resin, polymethylpentene resin, polyether ether ketone resin, polyether ketone ketone resin, and polyaryl ether ketone resin, which are high in heat resistance at 150°C. Of these highly heat resistant resins, more preferable ones include polyphenylene sulfide resin, polyetherimide resin, polyphenyl sulfone resin, and polyethersulfone resin, which are low in dielectric loss tangent and suitable for use in capacitors, and it is more preferable that at least one of these resins is used and that they account for 50% by mass or more and 100% by mass or less. Modifications and derivatives of these resins and copolymers thereof with other compounds may also be used. Furthermore, they may be used singly or as a combination of two or more thereof.

The resin layer A in the film for a film capacitor according to the present invention may contain an antioxidant, photostabilizer, ultraviolet absorber, plasticizer, lubricant, crosslinking agent, flame retardant, antistatic agent, heat resistance improving agent, coloring agent, slip agent, antiblocking agent, inorganic particles, resin particles, inorganic compounds, organic compounds, etc., unless they impair good characteristics of the film. Here, as required, these components may be used singly or a plurality thereof may be used in combination.

The film for a film capacitor according to the present invention includes a layer B having a thickness smaller than that of the resin layer A and disposed at least as either of the outermost layers of the film. The layer B has an oxygen atom content of 1.0% by mass or more. The oxygen atom content in the layer B is preferably 1.5% by mass or more, more preferably 21% by mass or more, and still more preferably 25% by mass or more. The upper limit of the oxygen atom content in the layer B is not particularly limited, but it is preferably 50% by mass, more preferably 37% by mass, and still more preferably 34% by mass. If the content of oxygen atoms contained in the layer B is 1.0% by mass or more, the layer B is likely to volatilize at the time of dielectric breakdown, and enhanced self-healing property is ensured. If the content of oxygen atoms contained in the layer B is 50% by mass or less, it serves to produce a film that suffers little blocking between sheets of the film and can ensure high productivity. The fact that the oxygen atom content in the layer B is 1.0% by mass or more means that the oxygen atom in the layer B accounts for 1.0% by mass or more relative to the total mass of the hydrogen atom, carbon atom, sulfur atom, silicon atom, nitrogen atom, and oxygen atom, which accounts for 100% by mass, in the layer B. The content of the silicon atom Si in the layer B, which will be described later, can be interpreted in the same manner.

For the present invention, there are no specific limitations on the thickness of the layer B, but it is preferably 10 nm or more and more preferably 50 nm or more. If the thickness of the resin layer B is 10 nm or more, it will be easy to realize better self-healing property. There are no specific limitations on the upper limit of the thickness of the layer B, but it is preferably 5.0 $\mu$m, more preferably 1.0 $\mu$m, still more preferably 0.50 $\mu$m, and particularly preferably 0.30 $\mu$m. If the thickness of the layer B is 5.0 $\mu$m or less, it will be easy to realize a higher dielectric breakdown voltage.

Here, the thickness of each layer can be determined by observing the cross section in the width-thickness direction under a field emission type scanning electron microscope and measuring the thickness by its length measuring function. The procedure will be described in detail later. Furthermore, the atomic content in each layer can be determined from the atomic fraction measured based on simultaneous Rutherford backscattering/hydrogen forward scattering analysis (Pelletron 3SDH, manufactured by National Electrostatics Corporation). The procedure will be described in detail later (not only the oxygen atom content in the layer B, but also the contents of other atoms in each layer can be determined in the same way).

The content of the silicon atom Si in the layer B is preferably 27% by mass or less. The upper limit of the content of the silicon atom Si in the layer B is more preferably 15% by mass or less, still more preferably 3.0% by mass or less, still more preferably 1.0% by mass or less, and particularly preferably 0% by mass. If the content of the silicon atom Si contained in the layer B is 27% by mass or less, it serves to prevent the capacitor characteristics from being deteriorated by the siloxane generated at the time of dielectric breakdown.

It is preferable that the layer B satisfy the requirement (i) specified below.

Requirement (i): The value of XB calculated by the formula (I) given below from the atomic fractions of the hydrogen atom H, carbon atom C, sulfur atom S, silicon atom Si, nitrogen atom N, and oxygen atom O contained in the layer B is 0.90 or less.

Formula (I)   XB = (atomic fraction of carbon atom C in the layer B + atomic fraction of nitrogen atom N in the layer B + atomic fraction of sulfur atom S in the layer B + atomic fraction of silicon atom Si in the layer B ) / (atomic fraction of hydrogen atom H in the layer B + atomic fraction of oxygen atom O in the layer B)

The upper limit of XB in the requirement (i) is more preferably 0.80, still more preferably 0.70, and particularly preferably 0.65. XB is the ratio between the atoms that tend to vaporize slowly and the atoms that tend to vaporize quickly at the time of dielectric breakdown. Control of this value at 0.90 or less makes it easy to ensure better self-healing property and higher capacitor reliability. The lower limit of XB is not particularly limited, but it is preferably 0.050 and more preferably 0.20. Control of XB at 0.050 or more makes it easy to realize good adhesion between the layer B and the resin layer A.

The raw material to use for the layer B is not particularly limited, but useful materials include, for example, resins and low molecular weight organic compounds. It is preferable to use a resin from the viewpoint of adhesion to the resin layer A. There are no specific limitations on the resin to use for the layer B, but useful ones include, for example, polyolefin resins such as polystyrene (PS) resin, polymethylpentene (PMP) resin, cyclic olefin (COP) resin, and cyclic olefin copolymer (COC) resin; polyester resins such as polyethylene terephthalate (PET) resin, polybutylene terephthalate (PBT) resin, and polyethylene naphthalate (PEN) resin; polyamide resins such as polyamide 6 (PA6) resin, polyamide 66 (PA66) resin, polyamide 46 (PA46) resin, polyamide 4T (PA4T) resin, polyamide 6T (PA6T) resin, modified polyamide 6T (modified PA6T) resin, polyamide 9T (PA9T) resin, polyamide 10T (PA10T) resin, and polyamide 11T (PA11T) resin; polysulfone resins such as polyethersulfone (PES) resin and polyphenyl sulfone (PPSU) resin; polyarylene sulfide resins such as polyphenylene sulfide (PPS) resin, polyphenylene sulfide ketone resin, polyphenylene sulfide sulfone resin, and polyphenylene sulfide ketone sulfone resin; polyimide (PI) resins such as polyimide (PI) resin, polyetherimide (PEI) resin, and polyamide-imide (PAI) resin; polyaryl ether ketone resins such as polyether ketone (PEK) resin, polyether ether ketone (PEEK) resin, polyether ketone ketone (PEKK) resin, polyether ether ketone ketone (PEEKK) resin, polyether ketone ether ketone ketone (PEKEKK) resin; fluorine resins such as polytetrafluoroethylene (PTFE) resin (also called tetrafluoroethylene resin), polytetrafluoroethylene-perfluoroalkylvinyl ether copolymer (PFA) resin (also called tetrafluoroethylene-perfluoroalkylvinyl ether copolymer resin), tetrafluoroethylene-hexafluoropropylene copolymer (FEP) resin (also called tetrafluoroethylene-hexafluoropropylene copolymer resin), tetrafluoroethylene-ethylene copolymer (ETFE) resin (also called tetrafluoroethylene-ethylene copolymer resin), polychlorotrifluoroethylene (PCTFE) resin (also called chlorotrifluoroethylene resin), polyvinylidene fluoride (PVDE) resin (also called polyvinylidene fluoride resin), and polyvinylidene fluoride-tetrafluoroethylene-hexafluoropyrene copolymer resin; and others such as polyacetal resin, liquid crystal polymer (LCP) resin, polycarbonate (PC) resin, polyallylate (PAR) resin, phenol resin, polyurea resin, melamine resin, epoxy resin, alkyd resin, acrylic resin, polymethyl methacrylate resin (PMMA), polyurethane resin (PU), polyurethane acrylate resin, cellulose, cellulose derivatives (for example, cellulose acetate, carboxymethyl cellulose, hydroxyethyl cellulose, and hydroxypropylmethyl cellulose), petroleum resin, terpene resin, and terpene phenol resin. Of these resins, those resins that give a low XB value and act to ensure better self-healing property include polyolefin resins such as polyethylene (PE) resin, polypropylene (PP) resin, polystyrene (PS) resin, polymethylpentene (PNP) resin, cyclic olefin (COP) resin, and cyclic olefin copolymer (COC) resin; polyester resins such as polyethylene terephthalate (PET) resin, polybutylene terephthalate (PBT) resin, and polyethylene naphthalate (PEN) resin; and others such as epoxy resin, alkyd resin, acrylic resin, polymethyl methacrylate resin (PMMA), polyacetal resin, liquid crystal polymer (LCP) resin, polycarbonate (PC) resin, polyallylate (PAR) resin, phenol resin, cellulose, cellulose derivatives (for example, cellulose acetate, carboxymethyl cellulose, hydroxyethyl cellulose, hydroxypropylmethyl cellulose), petroleum resin, terpene resin, and terpene phenol resin.

Of these raw materials, the acrylic resin can serve to enhance the heat resistance due to crosslinking that occurs during its formation, and the epoxy resin and cellulose derivatives have high heat resistance due to their unique main skeleton structures. When producing a capacitor element that includes the film for a capacitor according to the present invention, their use as material for the layer B makes it easy to produce a product having longer life at high temperatures. Furthermore, since the acrylic resin, epoxy resin, cellulose derivatives, and polyester resin contain oxygen atoms, their use makes it easy to increase the oxygen atom content in the layer B and enhance the self-healing property. From these viewpoints, it is more preferable that the layer B contain at least one resin selected from acrylic resin, epoxy resin, cellulose derivatives, and polyester resin and that they account for 50% by mass or more and 100% by mass or less. These raw materials may be in the form of modifications, derivatives, or copolymers with other compounds, or they may be monomers, which are applied and then polymerized to form resin. Furthermore, they may be used singly or as a combination of two or more thereof.

For the film for a film capacitor according to the present invention, the layer B preferably contains two or more components that are incompatible with each other so that high asperities can be formed on the layer B side surface in order to ensure high slipperiness. Here, "components that are incompatible with each other" mean two components that are not uniformly mixed with each other at the molecular level. More specifically, in the case where there are two phases each containing different substances as main components and forming separate phase structures of 0.01 μm or more, such two components are deemed incompatible with each other (whether the components are the main components or not can be determined based on whether they account for 50% by mass or more of the total mass of the components that constitute the layer B). In the case where three or more components are contained in the layer B, the requirement for "containing two or more components that are incompatible with each other" is considered to be satisfied if a phase including one of the components as main component has a phase structure of 0.01 μm or more. In the case where the layer B contains three or more components, furthermore, if two of the components satisfies the above requirement, then it is considered that the layer contains two or more components that are incompatible with each other, regardless of whether the other remaining components satisfy the above requirement.

Whether or not two or more components are incompatible with each other can be determined by electron microscopy, differential scanning calorimetry (DSC), and various other methods as described in Polymer Alloys and Blends, Leszek A Utracki, hanser Publishers, Munich Viema New York, P64. There are no specific limitations on the method to use for producing high asperities by mixing two or more components that are incompatible with each other, but useful ones include, for example, a method in which particles and resin are dispersed in a solvent so that the particles remain to form asperities in a subsequent drying step, a method in which a resin that is higher and another resin that is lower in the affinity with the material of the resin layerA are mixed, with the resin with lower affinity accounting for a smaller part, so that the resin with lower affinity form asperities scattered on the layer B side surface, a method in which two solvents with different boiling points containing different resins having high affinity with the respective solvents are prepared, followed by a drying step performed at a temperature where either of the solvents evaporates earlier so that the dissolved resin in the remaining solvent is precipitated to form asperities, and a method in which these methods are combined.

Preferable examples of the combination of two components that are incompatible with each other used to form the layer B include a combination of an acrylic resin and a cellulose derivative, a combination of a cellulose derivative and an epoxy resin, and a combination of a methacrylic resin and an acrylic resin. These materials may be in the form of modifications, derivatives, or copolymers with other compounds, or they may be monomers, which are applied for coating and then polymerized to form resin. In the case where the layer B is produced by coating the resin layer A with a composition designed to form the layer B, it is preferable to prepare a coating liquid containing a combination as listed above where one component is a polymer while the other is a monomer and subsequently applying it and polymerizing the monomer. If workability is a priority, furthermore, it is preferable to use, for example, a combination of epoxy resin and silica.

From the viewpoint of producing a capacitor with a prolonging life, the film for a film capacitor according to the present invention preferably has a dielectric loss tangent of 2.0% or less. In view of the above, the upper limit of the dielectric loss tangent of the film for a film capacitor is preferably 0.70%, more preferably 0.40%, and still more preferably 0.30%. If the film for a film capacitor has a dielectric loss tangent of 2.0% or less, a film capacitor made thereof will suffer less heat generation while in operation, and accordingly, the film capacitor will have a prolonged life. The lower limit of the dielectric loss tangent of the film for a film capacitor is not particularly limited, but it is preferably 0.0010%, more preferably 0.010%. The dielectric loss tangent of the film for a film capacitor can be decreased by using a resin with a low polarity as the material of the resin layer A. In the case where the layer B is made of a raw material having a higher dielectric loss tangent than that of the resin layer A, it can be decreased by decreasing the thickness of the layer B. Here, the dielectric loss tangent referred to above is a value measured according to JIS C2138-2007, and the measuring procedure therefor will be described in detail later.

The first embodiment of the film for a film capacitor according to the present invention satisfies both of the relations $\mu daa > \mu dab$ and $\mu dab \leq 1.2$ where $\mu daa$ is the dynamic friction coefficient between either of the two outermost layer surfaces, referred to as type-a surface, and the same type of outermost layer surface, i.e. type-a surface, and $\mu dab$ is the dynamic friction coefficient between the type-a surface and the other outermost layer surface, referred to as type-b surface, with the dynamic friction coefficient between two type-a surfaces being larger than that between two type-b surfaces. In addition, the dynamic friction coefficient between two type-b surfaces is represented as $\mu dbb$. Regarding $\mu dab$, more preferably $\mu dab \leq 0.90$, still more preferably $\mu dab \leq 0.75$, and particularly preferably $\mu dab \leq 0.60$. If the both of the relations $\mu daa > \mu dab$ and $\mu dab \leq 1.2$ hold, it is possible to improve the slipperiness without causing deterioration of capacitor characteristics. Furthermore, a decrease in $\mu dab$ serves to improve the workability. The lower limit of $\mu dab$ is not particularly limited, but it is preferably 0.10. If $\mu dab$ is 0.10 or more, a wound-up roll that does not unwind easily can be produced easily by winding the film for a film capacitor according to the present invention. Here, the dynamic friction coefficient is measured under a load of 200 g at 25°C and 65% RH according to JIS K 7125 (1999). The procedure will be described in detail later.

There are no specific limitations on the method to use to adjust $\mu daa$ and $\mu dab$ so as to satisfy the relations $\mu daa > \mu dab$ and $\mu dab \leq 1.2$, but for example, a good method is to form the resin layer A on a smooth base film or a mirror-surfaced roller and then form the layer B on it in such a manner that two mutually incompatible components are included in the raw material. When μdab has a large value, the value of μdab can be lowered by adjusting the mixing ratio between the above-mentioned two components so that the difference between their contents decreases. To ensure that μdaa ≤ μdab, furthermore, the relation μdaa > μdab can be realized by decreasing the value of μdab by the method described above or by using a base film or roller with higher smoothness to form the resin layer A.

The value of μdbb is not particularly limited, but it is preferably 0.10 or more and more preferably 0.25 or more. If μdbb is 0.10 or more, it will be easy to suppress the unwinding of a wound-up roll produced by winding the film for a film capacitor according to the present invention. There are no specific limitations on the upper limit of μdbb, but it is preferably 2.0, more preferably 1.5, and still more preferably 1.2. If μdbb is 2.0 or less, the workability can be increased easily.

The value of μdaa is not particularly limited, but it is preferably 0.10 or more and more preferably 0.25 or more. If μdaa is 0.10 or more, it will be easy to suppress the unwinding of a wound-up roll produced by winding the film for a film capacitor according to the present invention. There are no specific limitations on the upper limit of μdaa, but it is preferably 2.0, more preferably 1.5, and still more preferably 1.2. If μdaa is 2.0 or less, the workability can be increased easily.

For the film for a film capacitor according to the present invention, it is preferable that at least either of the outermost layer surfaces satisfies the relation Smr1 ≥ 12% where Smr1 is the percentage of surface at the intersection of core surface maximum height and areal material ratio curve. The value of Smr1 represents the ratio of the asperity portion, and therefore, as this value increases, it will be possible to reduce more effectively the contact area between this and another surface that occurs when they come in contact with each other. If Smr1 is 12% or more, it will be easy to improve the slipperiness while allowing the film to maintain a high dielectric breakdown voltage. The upper limit of Smr1 is not particularly limited, but it is preferably 49% and more preferably 18%. If Smr1 is 49% or less, deformation of the film surface can be suppressed easily when the film for a film capacitor according to the present invention is wound up into a roll. Here, Smr1 can be measured and calculated according to ISO 25178-2: 2012 and ISO 25178-3: 2012, and the measuring procedure will be described in detail later.

There are no specific limitations on the method to adjust the Smr1 of at least either of the outermost layer surfaces so as to satisfy the relation Smr1 ≥ 12%, but for example, a good method is to form the layer B in such a manner that two mutually incompatible components are included in the raw material. In the case where the value of Smr1 is small, Smr1 can be increased by adjusting the mixing ratio between the above-mentioned two components so that the difference between their contents increases or by decreasing the solubility parameter (so-called the SP value) of the two components.

It is preferable that the relation XA > XB hold between XA and XB where the former is calculated by the formula (II) given below from the atomic fractions of the hydrogen atom H, carbon atom C, sulfur atom S, silicon atom Si, nitrogen atom N, and oxygen atom O contained in the resin layer A.

Formula (II)   XA = (atomic fraction of carbon atom C in resin layer A + atomic fraction of nitrogen atom N in resin layer A + atomic fraction of sulfur atom S in resin layer A + atomic fraction of silicon atom Si in resin layer A) / (atomic fraction of hydrogen atom H in resin layer A + atomic fraction of oxygen atom O in resin layer A)

A larger XA tends to lead to a resin having a structure with a higher degree of unsaturation and a larger rigidity, and accordingly, it becomes easier to improve the self-healing property while maintaining a high heat resistance if the relation XA > XB is satisfied.

It is preferable that the ratio between the mean height of peaks above the core surface of the type-a surface, referred to as Spk-a, the mean height of peaks above the core surface of the type-b surface, referred to as Spk-b, satisfy the relation Spk-b/Spk-a ≥ 2.0, and also that the percentage of surface at the intersection of core surface maximum height and areal material ratio curve in the type-b surface, referred to as Smr1-b, satisfy the relation Smr1-b ≥ 12%. If Smr1-b is 12% or more, the slipperiness of the film can be improved. The upper limit of Smr1-b is not particularly limited, but it is preferably 49%. If Smr1-b is 49% or less, deformation of the film surface can be suppressed easily when the film for a film capacitor according to the present invention is wound up into a roll. If both of the relations Spk-b/Spk-a ≥ 2.0 and Smr1-b ≥ 12% are satisfied, a film with high slipperiness can be produced easily. Here, Spk-a and Spk-b can be measured and calculated according to ISO 25178-2: 2012 and ISO 25178-3: 2012, and the measuring procedure will be described in detail later.

There are no specific limitations on the method to use to allow the values of Spk-a, Spk-b, and Smr1-b of at least either of the outermost layer surfaces to satisfy both of the relations Spk-b/Spk-a ≥ 2.0 and Smr1-b ≥ 12%, but for example, a good method is to form the layer B in such a manner that two mutually incompatible components are included in the raw material. In the case where the value of Spk-b/Spk-a is small, Spk-b/Spk-a can be increased by increasing the difference between the contents of the above-mentioned two components and increasing the solubility parameter (so-called the SP value) of the two components. In the case where the value of Smr1-b is small, Smr1-b can be increased by adjusting the mixing ratio between the above-mentioned two components so that the difference between their contents increases or by decreasing the solubility parameter (so-called the SP value) of the two components.

It is preferable that each of the outermost layer surfaces of a film for a film capacitor according to the present invention satisfies the relation Sv/T(F) < 0.30 where T(F) is the total thickness of the resin layer A and the layer B and Sv is the maximum valley depth in each surface. The upper limit of Sv/T (F) is preferably 0.20 for both surfaces. That is, it is more preferable that the relation Sv/T(F) ≤ 0.20 be satisfied. Sv/T(F) represents the size of the pits in the film relative to its thickness, and as this ratio increases, the film suffers dielectric breakdown more easily than other films with the same thickness. If Sv/T(F) is less than 0.30, it serves to produce a film with better withstand voltage characteristics. Here, Sv can be measured and calculated according to ISO 25178-2: 2012 and ISO 25178-3: 2012, and the measuring procedure will be described in detail later.

There are no specific limitations on the method to use to adjust Sv/T(F) to less than 0.30, but for example, a good method is to form the resin layer A on a smooth base film or a mirror-surfaced roller and then apply thereon raw materials for the layer B in the form of a solution or liquid using a coater, followed by drying to produce the layer B. If the layer B side surface has a Sv/T(F) of 0.30 or more, the Sv/T (F) value can be decreased by adding a leveling agent to the raw material for the layer B.

For both of the outermost layer surfaces of the film for a film capacitor according to the present invention, the maximum valley depth Sv is preferably 0.10 nm or more and more preferably 10 nm or more. The workability can be increased easily when the maximum valley depth Sv is 0.10 nm or more for both of the outermost layer surfaces of the film for a film capacitor according to the present invention. For both of the outermost layer surfaces of the film for a film capacitor according to the present invention, the upper limit of the maximum valley depth Sv is preferably 5,000 nm. If the maximum valley depth Sv is 5,000 μm or less for both of the outermost layer surfaces of the film for a film capacitor according to the present invention, it will be easy to produce a film with better withstand voltage characteristics.

Described below is the metal layer laminated film for a film capacitor according to the present invention. From the viewpoint of integration, the film for a film capacitor according to the present invention is preferably a metal layer laminated film for a film capacitor that has a metal layer at least on the surface of either of the outermost layers. In order to achieve better self-healing property, the metal layer laminated film for a film capacitor preferably contains the resin layer A, the layer B, and the metal layer in this order. Here, the expression "containing the resin layer A, the layer B, and the metal layer in this order" refers to any structure in which the resin layer A, the layer B, and the metal layer exist in this order and it doesn't matter whether other layers exist between the resin layer A and the layer B or between the layer B and the metal layer.

Furthermore, in order to allow the resin layer A, which is made of a highly heat resistant resin, to have enhanced smoothness so that the slipperiness is improved effectively by the layer B while maintaining good withstand voltage characteristics, it is preferable that in the metal layer laminated film for a film capacitor according to the present invention, the layer B exists only on one side of the resin layer A with the metal layer existing on the layer B and that the type-b surface be located on the layer B side when looked from the resin layer A where, of the two outermost layer surfaces, the type-a surface is the one such that the dynamic friction coefficient between two type-a surfaces is larger than that between two type-b surfaces.

The thickness of the metal layer is preferably in the range of 1 nm or more and 100 nm or less, more preferably 5 nm or more and 80 nm or less, and still more preferably 10 nm or more and 50 nm or less. Furthermore, the metal layer preferably has a surface resistance in the range of 0.1 Ω/sq or more and 10 Ω/sq or less, more preferably 2 Ω/sq or more and 8 Ω/sq or less, and still more preferably 3 Ω/sq or more and 6 Ω/sq or less. This is because if the surface resistance value of the metal layer is less than 0.1 Ω/sq, it is not preferable since it may cause deterioration of the self-healing property (also referred to as self-repairing property). It is also because if, on the other hand, it is more than 10 Ω/sq, the dielectric loss tangent may deteriorate.

The film for a film capacitor according to the present invention is preferred for use as a dielectric film for a capacitor, but it is not limited to any specific capacitor type. Specifically, in regard to the electrode structure, it can be applied to producing wound foil capacitors, metal vapor-deposited film capacitors, oil impregnated capacitors, which are impregnated with insulating oil, and dry capacitors, which are completely free of insulating oil. In regard to the shape, it may be of a wound-up type or of a laminated type. In particular, in view of the characteristics of the film according to the present invention, it is preferably used as a metal vapor-deposited type film capacitor that contains a metal layer laminated film. There are no specific limitations on the method to use for producing a metal layer, but useful methods include, for instance, vacuum deposition, sputtering, ion plating, and plating. Of these methods, the use of vacuum deposition is preferable because it ensures high productivity. When a metal layer is formed by vapor deposition, the oil based vapor deposition technique, the tape based vapor deposition technique, etc. are used. There are no specific limitations on the vapor deposition pattern of the metal layer, but preferred patterns include, for example, a T-margin pattern, honeycomb pattern, and mosaic pattern.

Described next is the film capacitor according to the present invention. The film capacitor according to the present invention includes the metal layer laminated film for a film capacitor according to the present invention. The film capacitor according to the present invention can be used as part of an inverter and/or converter for an automobile (for example, an inverter for a hybrid electric vehicle, a converter for a hybrid electric vehicle, an inverter for an electric vehicle, a converter for an electric vehicle, etc.).

Described next is a typical production method for the film for a film capacitor according to the present invention. The typical method described below is designed to produce a two layered structure having a resin layer A and a layer B, but it is noted that the film for a film capacitor according to the present invention is considered to have a two layered structure as long as it has at least the resin layer A and the layer B, and it may have a three or more layered structure that include additional layers other than the above. In the case of a three or more layered structure, the thickest of those layers having a melting point of 180°C or more and/or a glass transition temperature of 130°C or more is adopted as the resin layer A.

First, useful methods for forming the resin layer A include a process in which raw material for the resin layer A is supplied to an extruder, melt-extruded from slit-like nozzle such as T-die, and solidified on a cooling drum etc. to form a resin layer A, a process in which raw material for the resin layer A in the form of a solution or liquid is applied with a coater to a substrate film such as a polyolefin film, polyethylene terephthalate film, polyimide film, and a film prepared by coating these films with silicone to improve releasability and then dried to form a resin layer A, and a process in which such a liquid is cast on a casting belt and then dried to form a resin layer A. In particular, from the viewpoint of providing a resin layer A with improved smoothness, it is preferable to adopt either the process in which raw material for the resin layer A in the form of a solution or liquid is applied with a coater to a substrate film and then dried to form a resin layer A or the process in which the raw material for the resin layer A is supplied to an extruder, melt-extruded from a slit-like nozzle such as T-die, and solidified on a cooling drum etc. to prepare a film, followed by stretching it uniaxially or biaxially to form a resin layer A. In the case where the resin layer A is formed on a substrate film, the resin layer A may be or may not be removed from the substrate film before the layer B is formed, but from the viewpoint of ensuring improved transportability, it is preferable to form the layer B before removing it.

To form layer B on either surface of the resin layer A, good methods include a process in which the raw material for the layer B in the form of a solution or liquid is applied with a coater to the surface of the resin layer A and then dried and a process in which raw material for the layer B is vacuum-deposited on the resin layer A. From the viewpoint of forming a layer B having higher asperities, it is preferable to adopt the formation process in which raw material for the layer B in the form of a solution or liquid is applied with a coater to the surface of the resin layer A and then dried. In the case where the layer B is formed by applying its raw material to either surface of the resin layer A, that surface of the resin layer A to be coated may be subjected to surface treatment such as corona discharge treatment in advance. The implementation of surface treatment such as corona discharge treatment can serve to easily improve the wettability of the surface to be coated by the coating composition and prevent cissing of the coating composition to ensure a uniform coating thickness. When forming a metal layer on the resulting film that contains the resin layer A and the layer B, the method to use therefor is not particularly limited, but it is preferable to deposit the metal on the layer B by vacuum deposition. The metal used for vapor deposition is preferably aluminum. In this instance, another metal component such as, for example, nickel, copper, gold, silver, chromium, and zinc may be deposited simultaneously with or subsequent to the aluminum deposition. When the formation of a metal layer on the film that contains the resin layer A and the layer B is carried out by vapor deposition, the film surface to be covered with metal may be subjected to surface treatment such as corona discharge treatment before the vacuum deposition. The implementation of surface treatment such as corona discharge treatment serves to achieve stronger contact between the deposited metal and the film.

When forming the layer B, it is preferable to crosslink the components of the layer B. The method to use for the crosslinking is not particularly limited, but a good method is to use a compound having a plurality of reactive sites as a raw material for the layer B and cause a crosslinking reaction by applying heat or ultraviolet ray. Examples of the compound having a plurality of reactive sites include an acrylate having two or more vinyl groups, an epoxy compound having two or more epoxy groups, and a condensate of melamine and formaldehyde. Of these, the use of an acrylate having two or more vinyl groups is preferable in order to form a layer B having a higher oxygen concentration to ensure enhanced self-healing property. To accelerate the crosslinking reaction, a catalyst such as an acid or a base, an additive such as cation initiator, anion initiator, and radical initiator, etc. may be added when forming the layer B in an amount that suits the reactivity of the reactive site. When an acrylate having two or more vinyl groups is used as raw material for the layer B, for example, the crosslinking reaction can be accelerated by preparing a coating liquid containing a radical initiator that generates radicals when exposed to ultraviolet ray, applying the coating liquid to the resin layer A, and irradiating it with ultraviolet ray. There are no specific limitations on the radical initiator to use, but useful ones include hydroxyalkylphenone-type initiators and aminoacetophenone-type initiators that generate radicals when exposed to ultraviolet ray. The crosslinking of the layer B makes it easy to increase the heat resistance of the film for a film capacitor according to the present invention.

EXAMPLES

The film for a film capacitor according to the present invention is described more specifically below with reference to examples. The methods used for measuring characteristic values and the methods used for evaluation of effects are as described below.

(1) Thickness of film T(F)

The thickness was measured at 10 randomly selected positions on a film sample in a 23°C and 65%RH atmosphere using a contact type electronic micrometer (K-312 A, manufactured by Anritsu Corporation). The arithmetic average of the thickness measurements taken at 10 positions was adopted as the film thickness T(F).

(2) Thickness T(A) of resin layer A and thickness T(B) of layer B

Using the microtome method, an ultrathin section having a cross section in the width-thickness direction of the film and having a width of 5 mm was prepared, and the cross section was coated with platinum to prepare a sample for observation. Next, the cross section of the film was observed using a field emission-type scanning electron microscope (S-4800, manufactured by Hitachi, Ltd.) at an acceleration voltage of 1.0 kV, and the thickness of the resin layer A and the thickness of the layer B were measured at an appropriate position of the image observed. Here, of the two layers, the thicker one was designated as the resin layer A while the thinner one was designated as the layer B, and observation was performed at a magnification of 10,000 times. Furthermore, the same measuring procedure was performed 20 times in total, and the averages of the measurements were calculated as the thickness T(A) of the resin layer A and the thickness T(B) of the layer B.

(3) Melting point and glass transition temperature of resin layer A

A 5 mg portion of the resin layer A adopted above by the procedure described in the paragraph (2) was weighed and then heated and cooled in a nitrogen atmosphere using a differential scanning calorimeter (EXSTAR DSC6220, manufactured by Seiko Instruments Inc.) according to the following program.

<Program>

Step 1: Heat it from 25°C to 330°C at 10°C/min and then keep it at 330°C for 5 minutes.
Step 2: Cool it from 330°C to 25°C at -10°C/min and then keep it at 25°C for 5 minutes.
Step 3: Heat it from 25°C to 330°C at 10°C/min and then keep it at 330°C for 5 minutes.
When the DSC chart observed in the temperature rise process in step 3 is viewed from 330°C toward low temperatures, the maximum temperature in the temperature range where the slope of the DSC curve changes from the slope of the baseline is designated as $T\_1$ while the minimum temperature, which is lower than $T\_1$, in the temperature range where the slope of the DSC curve returns toward the slope of the baseline is designated as $T\_2$. Then, the Tg value calculated by the formula given below was adopted as the glass transition temperature of the resin layer A.

<Calculation formula>

$$Tg = (T\_1 + T\_2) / 2$$

Furthermore, the peak temperature in the endothermic curve observed in the step 3 was determined as the melting point of the resin layer A. When a plurality of peak temperatures was observed, the highest of their temperatures was adopted as the melting point of the resin layer A. However, in the case where no peak was observed in the endothermic curve measured in the step 3 and also where the slope of the DSC curve showed no change from the slope of the baseline in the region of 25°C or more when the DSC chart measured in the temperature rise process in step 3 was viewed from 330°C toward low temperatures, it was judged that both the melting point and the glass transition temperature of the resin layer A were 330°C or higher. In the case where no peak was observed in the endothermic curve measured in the step 3 and where the glass transition temperature was less than 330°C, it was judged that the sample had no melting point. In the case where the slope of the DSC curve showed no change from the slope of the baseline in the region of 25°C or more when the DSC chart measured in the temperature rise process in step 3 was viewed from 330°C toward low temperatures and where the melting point was 330°C or less, it was judged that the sample had no glass transition temperature. In such cases, "-" is given in the relevant cells in Tables 1 to 3.

(4) Atomic fractions of hydrogen atom H, carbon atom C, sulfur atom S, silicon atom Si, nitrogen atom N, and oxygen atom O contained in resin layer A and layer B, and contents of oxygen atom O and silicon atom Si in layer B

The resin layer A side surface of a film was analyzed by the simultaneous Rutherford backscattering/hydrogen forward scattering method (Pelletron 3SDH, manufactured by National Electrostatics Corporation) to determine the atomic yields of the hydrogen atom H, carbon atom C, sulfur atom S, silicon atom Si, nitrogen atom N, and oxygen atom O, which are denoted by Y(H), Y(C), Y(S), Y(Si), Y(N) and Y(O), respectively, contained in the resin layer A. From the measurements obtained, the atomic fractions of the hydrogen atom H, carbon atom C, sulfur atom S, silicon atom Si, nitrogen atom N, and oxygen atom O contained in the resin layer A were calculated by the formulae given below.

<Calculation formulae>

Y(All) is defined as follows:

$$Y(All) = Y(C) + Y(S) + Y(Si) + Y(N) + Y(O) + Y(H)$$

$$\text{Atomic fraction of hydrogen atom H} = Y(H)/Y(All)$$

$$\text{Atomic fraction of carbon atom C} = Y(C)/Y(All)$$

$$\text{Atomic fraction of sulfur atom S} = Y(S)/Y(All)$$

$$\text{Atomic fraction of silicon atom Si} = Y(Si)/Y(All)$$

$$\text{Atomic fraction of nitrogen atom N} = Y(N)/Y(All)$$

$$\text{Atomic fraction of oxygen atom O} = Y(O)/Y(All)$$

For the layer B as well, the layer B side surface of the film was analyzed by the simultaneous Rutherford backscattering/hydrogen forward scattering method. Except for this, the same procedure as above was carried out for analysis and calculations of the various values to determine the atomic fractions of the hydrogen atom H, carbon atom C, sulfur atom S, silicon atom Si, nitrogen atom N, and oxygen atom O contained in the layer B. In addition, the contents of the oxygen atom O and silicon atom Si in the layer B were calculated by the formulae given below. Here, Y(C), Y(S), Y(Si), Y(N), Y(O), and Y(H) represent the relevant atomic fractions in the layer B.

<Calculation formulae>

$$\text{Content of oxygen atom O (\% by mass)} = 100 \times 16.0 \times Y(O) \, / \, (12.0 \times Y(C) + 32.1 \times Y(S) + 28.1 \times Y(Si) + 14.0 \times Y(N) + 16.0 \times Y(O) + 1.01 \times Y(H))$$

$$\text{Content of silicon atom Si (\% by mass)} = 100 \times 28.1 \times Y(Si) \, / \, (12.0 \times Y(C) + 32.1 \times Y(S) + 28.1 \times Y(Si) + 14.0 \times Y(N) + 16.0 \times Y(O) + 1.01 \times Y(H))$$

Here, measurements were taken under the conditions described below.

Incident ion: $^4$He$^{++}$
Incident energy: 2,300 keV
Angle of incidence: 75 deg
Scattering angle: 160 deg
Recoil angle: 30 deg
Sample current: 4 nA
Beam diameter: 2 mm
In-plane rotation: none
Exposure dose: 0.5 μC × 20 points

(5) XA and XB

From the values obtained by the method described in the paragraph (4), XB was calculated by the formula (I) given below and XA was calculated by the formula (II) given below.

Formula (I)   XB = (atomic fraction of carbon atom C in the layer B + atomic fraction of nitrogen atom N in the layer B + atomic fraction of sulfur atom S in the layer B + atomic fraction of silicon atom Si in the layer B ) / (atomic fraction of hydrogen atom H in the layer B + atomic fraction of oxygen atom O in the layer B)

Formula (II)   XA = (atomic fraction of carbon atom C in the resin layer A + atomic fraction of nitrogen atom N in the resin layer A + atomic fraction of sulfur atom S in the resin layer A + atomic fraction of silicon atom Si in the resin layer A) / (atomic fraction of hydrogen atom H in the resin layer A + atomic fraction of oxygen atom O in the resin layer A).

(6) Dynamic friction coefficient (μdaa, μdab, and μdbb)

Using a slip tester manufactured by Toyo Seiki Co., Ltd., the dynamic friction coefficient was measured at 25°C and 65% RH under a load of 200 g according to JIS K 7125 (1999). Here, either surface of a film is referred to as α-surface while the other surface is referred to as β-surface, and the dynamic friction coefficient was measured between two α-surfaces and between two β-surfaces. Three measurements were taken for each surface combination, and the average of the measurements was calculated to determine the dynamic friction coefficient of each surface combination. If the dynamic friction coefficient of either of the α-surface or the β-surface is larger than that of the other, that surface is referred to as type-a surface while the other surface, which has a lower dynamic friction coefficient, is referred to as type-b surface, and the dynamic friction coefficient between two type-a surfaces is denoted by μdaa while the dynamic friction coefficient between two type-b surfaces is denoted by μdbb. In addition, the dynamic friction coefficient between type-a surface and type-b surface was measured three times, and the average of the measurements was calculated. It is denoted by μdab. In each case, the measuring run was stopped when the frictional force detected by the load cell exceeded 5.9 N during measurement. In that case, the measured value of dynamic friction coefficient is shown as >3.0. When the two types of surfaces gave an equal measured value of dynamic friction coefficient or when both gave a measured value of >3.0, the surface that had a higher arithmetic average roughness Sa as measured by the method described later was adopted as type-b surface.

(7) Arithmetic average roughness Sa, peak material portion Smr1, reduced peak height Spk, and maximum valley depth Sv

These parameters were measured and calculated according to ISO 25178-2: 2012 and 25178-3: 2012. However, measurement was performed using a scanning white light interference microscope (VS1540, manufactured by Hitachi High-Tech Science Corporation, measuring conditions and equipment setup described later), and photographed image was complemented (complete complementation) by the attached analysis software, followed by surface correction by polynomial fourth-order approximation and processing by a median filter (3×3 pixels). In addition, the S-filter nesting index of the S-filter was set to 0.455. Measurements were taken from both sides of a 5 cm × 5 cm square sample cut out of a film. The intersection of the diagonals was used as the first measuring point (starting point), and then the second to fifth measuring points were defined as the positions each located 1 cm away from the starting point toward each of the four corners, thus resulting in five measurements in total. From the measurements taken at each measuring point, the Sa, Smr1, Spk, and Sv values were determined for each measuring point according to the procedure described above, and their averages were adopted as Sa, Smr1, Spk, and Sv of the film. Furthermore, the value of Spk on the type-a surface in particular was adopted as Spk-a whereas the values of Spk and Smr1 on the type-b surface were adopted as Spk-b and Smr1-b, respectively. The Spk-b/Spk-a ratio was calculated from the Spk-a and Spk-b values obtained above. The Sv/T(F) ratio was calculated from the Sv value of each surface and the T(F) value described above.

<Measuring conditions and equipment setup>

    Objective lens: 10x
    Lens barrel: 1x
    Zoom lens: 1x
    Wavelength filter: 530 nm white
    Measuring mode: wave
    Measuring software: VS-Measure 10.0.4.0
    Analyzing software: VS-Viewer 10.0.3.0
    Measuring region: 561.1 $\mu$m $\times$ 561.5 $\mu$m
    Pixel number: 1,024 $\times$ 1,024

(8) SH defect rate and self-healing property

The layer B side surface was subjected to corona discharge treatment in air at a processing intensity of 25 W•min/m$^2$. Here, in the case of a film with no layer B, the type-b surface was subjected to corona discharge treatment in air at a processing intensity of 25 W•min/m$^2$. Then, commercially available aluminum was vapor-deposited on the corona discharge-treated surface using a bell-jar-type vacuum vapor deposition apparatus at an air pressure of 1.0 $\times$ 10$^{-3}$ Pa and a filament voltage of 2.6 kV to form a vapor-deposited film of 50 nm, thus providing a metal layer laminated film. From the resulting metal layer laminated film, a rectangular piece of 12 cm $\times$ 7.5 cm having a long side in the length direction was cut out to prepare a test piece.

A 10 cm square sheet of Teflon (registered trademark) with a thickness of 1 mm was placed on a 1 m $\times$ 2 m copper plate. The test piece was placed on the Teflon (registered trademark) sheet in such a manner that the short sides of the test piece were parallel to a side of the Teflon (registered trademark) sheet and that the 1 cm wide region along one short side of the test piece covered the Teflon (registered trademark) sheet. A 5 cm square plate-like conductive rubber electrode was put on the Teflon (registered trademark) sheet in such a manner that it held an approximately 2 cm$^2$ portion of the test piece that covered the Teflon (registered trademark) sheet. Furthermore, a cylindrical electrode with a diameter of 3 cm was placed on the rubber electrode in such a manner that the center of gravity was in the region where the rubber electrode, test piece, and Teflon (registered trademark) sheet overlapped each other. A DC power supply was connected to the cylindrical electrode and the copper plate via electric wires, and a voltage of 100 VDC was applied as the initial voltage. After applying this voltage for 15 seconds, a so-called step-up test was carried out in which the voltage was increased gradually in repeated steps of 100 VDC/30 seconds until the applied voltage reached a value larger by 800 VDC than the initial voltage. This resulted in a plurality of dielectric breakdown marks on the metal layer laminated film.

The resulting dielectric breakdown marks were observed visually. Then, a dielectric breakdown mark site where two or more dielectric breakdown marks overlapped was counted as one SH defective site, whereas a dielectric breakdown mark site free of such overlapping was counted as one normal site, followed by calculating the SH defect rate by the formula given below. This measuring run was performed twice, and the average of the measurements was adopted to represent the SH defect rate. It is noted that in the case where dielectric breakdown did not occur, the above measuring procedure was performed with the initial voltage set to 900 VDC. When dielectric breakdown did not occur even at an initial voltage of 10,000 VDC, the SH defect rate was assumed to be 0%.

<Calculation formula>

SH defect rate (%) = 100 x (number of SH defective sites) / (number of normal sites + number of SH defective sites)

Based on the SH defect rate of the film, the self-healing property was evaluated as follows.

> S: The SH defect rate is 16% or less.
> A: The SH defect rate is more than 16% and 22% or less.
> B: The SH defect rate is more than 22% and 30% or less.
> C: The SH defect rate is larger than 30%.

(9) Evaluation for processability

The layer B side surface was subjected to corona discharge treatment in air at a processing intensity of 25 W•min/m$^2$. Here, in the case of a film with no layer B, the type-b surface was subjected to corona discharge treatment in air at a processing intensity of 25 W•min/m$^2$. Then, commercially available aluminum was vapor-deposited on the corona discharge-treated surface using a bell-jar-type vacuum vapor deposition apparatus at an air pressure of $1.0 \times 10^{-3}$ Pa and a filament voltage of 2.6 kV to form a vapor-deposited film of 50 nm, thus providing a metal layer laminated film. From the resulting metal layer laminated film, a rectangular piece of 12 cm $\times$ 7.5 cm having a long side in the length direction was cut out to prepare a test piece. Using a slip tester manufactured by Toyo Seiki Co., Ltd., the procedure for measuring the dynamic friction coefficient between the metal-deposited surface and the metal free surface of the metal layer laminated film prepared above was performed three times according to JIS K 7125 (1999) at 25°C and 65% RH under a load of 200 g, and the average of the measurements taken was adopted to represent the dynamic friction coefficient $\mu M$ of the metal laminated film. Here, the measuring run was stopped when the frictional force detected by the load cell exceeded 5.9 N during measurement. In that case, the measured value of $\mu M$ is shown as >3.0. Based on the value of $\mu M$ obtained above, the processability of the film was evaluated according to the criteria given below.

> S: The value of $\mu M$ is 0.60 or less.
> A: The value of $\mu M$ is more than 0.60 and 0.90 or less.
> B: The value of $\mu M$ is more than 0.90 and 1.5 or less.
> C: The value of $\mu M$ is more than 1.5.

(10) Dielectric loss tangent

The dielectric loss tangent was measured according to JIS C2138-2007. First, a film was cut into a square of 6 cm $\times$ 6 cm, and the layer B side surface was subjected to corona discharge treatment in air at a processing intensity of 25 W·min/m$^2$. Here, in the case of a film with no layer B, the type-b surface was subjected to corona discharge treatment in air at a processing intensity of 25 W•min/m$^2$. Then, commercially available aluminum was vapor-deposited on the corona discharge-treated surface using a bell-jar-type vacuum vapor deposition apparatus at an air pressure of $1.0 \times 10^{-3}$ Pa and a filament voltage of 2.6 kV to form a circular thin film electrode with a diameter of 5.6 cm and a thickness of 50 nm. Then, using a bell-jar-type vacuum vapor deposition apparatus, commercially available aluminum was vapor-deposited on the film surface that had not been subjected to corona discharge treatment at an air pressure of $1.0 \times 10^{-3}$ Pa and a filament voltage of 2.6 kV to form a circular thin film electrode with a diameter of 5.0 cm and a thickness of 50 nm in such a manner that the position of its center agreed with that of the electrode formed on the corona discharge-treated surface. Thus, a test piece was prepared. The dielectric loss tangent of the test piece thus prepared was measured by the contact method using an E4980A precision LCR meter (manufactured by Keysight Technologies) under the conditions of a temperature of 23°C, relative humidity of 50%, frequency of 10 kHz, and n = 5. The average of the measurements was adopted as the dielectric loss tangent of the film.

(11) Evaluation of dielectric breakdown voltage of film at 150°C

A film was heated for 1 minute in an oven maintained at 150°C and measurements were taken in that atmosphere according to the Method B (flat plate electrode method) specified in JIS C2330 (2001)7.4.11.2. Here, the lower electrode used was produced by preparing a metal plate as described for the Method B specified in JIS C2330 (2001) 7.4.11.2 and placing thereon a piece of Conductive Rubber E-100<65> manufactured by Togawa Rubber Co., Ltd. having the same size. The dielectric breakdown voltage test (described above) was performed 30 times and each measurement taken was divided by the thickness of the film (measured in the paragraph (1) above) and represented in V/$\mu$m. From the 30 measurements (calculations) obtained, the five largest ones and the five smallest ones were excluded, and the average of the remaining 20 measurements was calculated and adopted as the dielectric breakdown voltage of the film at 150°C. Based on the dielectric breakdown voltage of the film at 150°C thus determined, the dielectric breakdown voltage of the film at 150°C was evaluated as described below.

S: The dielectric breakdown voltage of the film at 150°C is 270 V/μm or more.

A: The dielectric breakdown voltage of the film at 150°C is 240 V/μm or more and less than 270 V/μm.

B: The dielectric breakdown voltage of the film at 150°C is 210 V/μm or more and less than 240 V/μm.

C: The dielectric breakdown voltage of the film at 150°C is 100 V/μm or more and less than 210 V/μm.

D: The dielectric breakdown voltage of the film at 150°C is less than 100 V/μm, or evaluation is impossible due to excessively large film shrinkage.

(12) Evaluation of characteristics of film capacitor (reliability at 150°C)

The layer B side surface of a film was subjected to corona discharge treatment in air at a processing intensity of 25 W·min/m². Here, in the case of a film with no layer B, the type-b surface was subjected to corona discharge treatment in air at a processing intensity of 25 W·min/m². Then, using a vacuum deposition apparatus manufactured by ULVAC, Inc., aluminum was vapor-deposited on a corona discharge-treated surface to a film resistance of 10 Ω/sq in a so-called T-shape margin pattern having a margin in the direction perpendicular to the length direction (masking oil used to achieve a length-directional pitch (cycle) of 17 mm and a fuse width of 0.5 mm) and the film was slit to provide a vapor-deposited film reel with a film width of 50 mm (edge margin 2 mm). Subsequently, from this reel, a film capacitor element was wound up by an element wind-up machine (KAW-4NHB) manufactured by Kaido Mfg. Co., Ltd., which was then subjected to metal spraying (so-called Metallikon) and heat treatment under reduced pressure at a temperature of 130°C for 8 hours, followed by attaching lead wire to produce a film capacitor element. Ten capacitor elements were produced in this way and a voltage of 250 VDC was applied to the capacitor elements at a high temperature of 150°C. After maintaining the voltage for 10 minutes, the applied voltage was increased gradually in repeated steps of 50 VDC/min to perform a so-called step-up test. The voltage was increased until the electrostatic capacity decreased to 12% or less of the initial value and the capacitor elements were disassembled to examine the state of destruction. The film capacitor characteristics were evaluated as described below.

S: There is no change in the shape of the film capacitor elements, and no penetrating fracture is found.

A: There is no change in the shape of the film capacitor elements, and a penetrating fracture through 5 or less film layers is found.

B: There is no change in the shape of the film capacitor elements, and a penetrating fracture through 6 or 7 film layers is found.

C: There is some change in the shape of the film capacitor elements, or a penetrating destruction through 8 to 14 film layers is found.

D: There is significant change and breakage in the shape of the film capacitor elements, or the film is so poor in processability that production of film capacitor elements is impossible.

-: Evaluation of film capacitor characteristics is not performed.

Film capacitor elements rated as S are usable without problems; those rated as A are usable under certain conditions; those rated as B are usable though inferior in practical performance; those rated as C are usable under certain conditions though inferior in practical performance. In those rated as D, the test piece has substantial difficulty in operating as a film for a capacitor.

[Resin, film, coating liquid]

Polyphenylene sulfide resin granules 1 (PPS granules 1):

In a 1 liter autoclave equipped with a process stirrer, 1.00 moles of 47 mass% sodium hydrosulfide, 1.02 moles of 96 mass% sodium hydroxide, 1.56 moles of N-methyl-2-pyrrolidone (NMP), 0.46 mole of sodium acetate, and 140 g of ion-exchanged water were added and gradually heated to 225°C over about 3 hours while stirring at 250 rpm and supplying nitrogen under normal pressure, and then 212 g of water and 4 g of NMP were evaporated out, followed by cooling the reaction vessel to 160°C. Next, 1.00 moles of p-dichlorobenzene (p-DCB) and 1.32 moles of NMP were added, and the reaction vessel was sealed in nitrogen gas. Then, while stirring at 240 rpm, the temperature was raised from 200°C to 235°C at a rate of 0.6°C/min, and after reaching 235°C, the reaction was continued at 235°C for 95 minutes. Then, the temperature was raised to 270°C at a rate of 0.8°C/min and maintained there for 100 minutes. In this step, after reaching 270°C, 1 mole of water was injected into the system over 15 minutes. After maintaining the temperature at 270°C for 100 minutes, it was lowered to 200°C at a rate of 1.0°C/min, and then further lowered to near room temperature by pouring cooling water at room temperature to the autoclave. Subsequently, the contents were taken out, diluted with 0.4 liter of NMP, and stirred at 85°C for 30 minutes, and then the solvent and the solid matter were separated using a sieve (80 mesh). Furthermore, 0.5 liter of NMP was added to the solid obtained and stirred at 85°C for 30 minutes, and the solid substance was separated by filtering. Then, the solid substance separated was washed with 0.9 liter of warm water three times and separated by filtering. To the particles (solid substance) thus obtained, 1 liter of warm water was added and the particles were washed twice and filtered to provide polymer particles. They were dried in hot air at 80°C and then further dried under reduced pressure at 120°C to provide polyphenylene sulfide (PPS) resin granules (PPS granules 1) having a melting point of 280°C and a weight average molecular weight of 70,000.

PPS raw material 1 for film (PPS1):

The PPS granules 1 were put in a codirectional rotation type vented twin-screw kneading extruder (manufactured by Japan Steel Works, Ltd., screw diameter 30 mm, screw length/screw diameter = 45.5) heated at 320°C, melt-extruded under the conditions of a residence time of 90 seconds and a screw rotation speed of 150 rpm, and discharged to provide a strand, which was then cooled with water having a temperature of 25°C. Then, immediately it was cut into chips to be used as PPS raw material 1 (PPS1) for film.

PPS raw material for film (PPS2):

A mixture powder prepared by mixing 100 parts by mass of the PPS granules 1, 0.05 part by mass of calcium carbonate particles 1 (NITOREX #30 PS, manufactured by Nitto Funka Kogyo K. K.) with an average particle size of 0.7 μm, and 0.2 part by mass of calcium stearate was pelletized to prepare resin pellets containing PPS as main component. The resulting resin pellets were put in a codirectional rotation type vented twin-screw kneading extruder (manufactured by Japan Steel Works, Ltd., screw diameter 30 mm, screw length/screw diameter = 45.5) heated at 320°C, melt-extruded under the conditions of a residence time of 90 seconds and a screw rotation speed of 150 rpm, and discharged to provide a strand, which was then cooled with water having a temperature of 25°C. Then, immediately it was cut into chips to be used as PPS raw material 2 (PPS2) for film.

PPS film 1:

PPS1, which was used as raw material, was vacuum-dried at 180°C for 3 hours. Then, it was supplied to an extruder, melted in a nitrogen atmosphere at a temperature of 320°C, and introduced into a T-die. Then, it was extruded through the T-die into a sheet in the form of a molten monolayer sheet, and this sheet was discharged on a cast drum having a surface temperature maintained at 25°C and rotating at a speed of 4.0 m/min so that it is cooled and solidified while being adhered to the drum by static electricity, thereby casting it to provide an unstretched film. The resulting unstretched film was sent to a longitudinal stretching machine having a plurality of heated rollers, in which the rollers had different circumferential speeds to stretch the film to a ratio of 3.1 in the length direction of the film at a stretching temperature of 103°C. Then, the uniaxially stretched film obtained was introduced into a tenter with the width-directional ends held by clips and stretched to a ratio of 3.3 in the width direction at a stretching temperature of 100°C. Subsequently, it was heat-treated at 280°C, relaxed by 2%, and cooled to room temperature. Then, the surface of the film (the surface discharged directly onto the casting drum) was subjected to corona discharge treatment in air at a processing strength of 25 W·min/m$^2$, and then the film edges were removed to provide a biaxially stretched PPS film having a thickness of 4.5 μm.

PPS film 2:

Except for using PPS2, instead of PPS1, as raw material, the same procedure as for PPS film 1 was carried out to provide a biaxially stretched PPS film having a thickness of 4.6 μm.

Coating liquid 1:

This coating liquid was prepared by mixing 70 g of acrylate (I) (trade name Viscoat #300, a condensate of pentaerythritol and acrylic acid, containing 45 mass% pentaerythritol tetraacrylate and 35 mass% pentaerythritol triacrylate, manufactured by Osaka Organic Chemical Industry, Ltd.), 50 g of cellulose acetate (i) (manufactured by FUJIFILM Wako Pure Chemical Corporation, acetylation degree 54%), 880 g of 2-butanone (manufactured by FUJIFILM Wako Pure Chemical Corporation), and 200 mg of Omnirad 184 (1-hydroxycyclohexyl phenylketone, manufactured by IGM Resins B.V.).

Coating liquid 2:

This coating liquid was prepared by mixing 70 g of acrylate (II) (trade name EBECRYL (registered trademark) 150, manufactured by Daicel-Allnex Ltd., ethylene oxide-modified bisphenol A diacrylate), 30 g of cellulose acetate (i), 900 g of 2-butanone (manufactured by FUJIFILM Wako Pure Chemical Corporation), and 200 mg of Omnirad 184 (1-hydroxycyclohexyl phenylketone, manufactured by IGM Resins B.V.).

Coating liquid 3:

This coating liquid was prepared by mixing 80 g of acrylate (I), 11 g of epoxy resin (trade name EPICLON 850, active group equivalent 189 eq/g, manufactured by DIC Corporation), 9.0 g of active ester (trade name HPC-8000-65T, active group equivalent 223 eq/g, manufactured by DIC Corporation), 900 g of 2-butanone (manufactured by FUJIFILM Wako Pure Chemical Corporation), 200 mg of Omnirad 184 (1-hydroxycyclohexyl phenylketone, manufactured by IGM Resins B.V.), and 10 mg of 4-dimethylaminopyridine (manufactured by Tokyo Chemical Industry Co. Ltd.).

Coating liquid 4:

This coating liquid was prepared by mixing 99.5 g of acrylate (II), 500 mg of acrylic resin (trade name MP-1451, non-crosslinked acrylic particles, manufactured by Soken Chemical & Engineering Co., Ltd., average particle size 150 nm), 900 g of 2-butanone (FUJIFILM Wako Pure Chemical Corporation), and 200 mg of Omnirad 184 (1 -hydroxycyclohexyl phenylketone, manufactured by IGM Resins B.V.).

Coating liquid 5:

This coating liquid was prepared by mixing 54 g of epoxy resin (trade name EPICLON (registered trademark) 850, active group equivalent 189 eq/g, manufactured by DIC Corporation), 45.5 g of active ester (trade name HPC-8000-65T, active group equivalent 223 eq/g, manufactured by DIC Corporation), 500 mg of acrylic resin (trade name MP-1451, non-crosslinked acrylic particles, manufactured by Soken Chemical & Engineering Co., Ltd., average particle size 150 nm), 900 g 2-butanone (FUJIFILM Wako Pure Chemical Corporation), and 10 mg of 4-dimethylaminopyridine (manufactured by Tokyo Chemical Industry Co. Ltd.).

Coating liquid 6:

This coating liquid was prepared by mixing 65 g of acrylate (I), 35 g of terpene phenol resin (trade name TH130, manufactured by Yasuhara Chemical Co., Ltd.), 900 g of 2-butanone (manufactured by FUJIFILM Wako Pure Chemical Corporation), and 200 mg of Omnirad 184 (1-hydroxycyclohexyl phenylketone, manufactured by IGM Resins B.V.).

Coating liquid 7:

This coating liquid was prepared by mixing 500 mg of acrylic resin (trade name MP-1451, non-crosslinked acrylic particles, manufactured by Soken Chemical & Engineering Co., Ltd., average particle size 150 nm), 99.5 g of cellulose acetate (i), and 900 g of 2-butanone (manufactured by FUJIFILM Wako Pure Chemical Corporation).

Coating liquid 8:

This coating liquid was prepared by mixing 99.9 g of nitrile butadiene rubber (trade name Nipol (registered trademark) DN003, manufactured by Zeon Corporation, Mooney viscosity 77.5), 100 mg of calcium carbonate particles 2 (trade name CALUCEO (registered trademark) P015S0, particle size 150 nm), and 900 g of 2-butanone (manufactured by FUJIFILM Wako Pure Chemical Corporation).

Coating liquid 9:

This coating liquid was prepared by mixing 54 g of epoxy resin (trade name EPICLON (registered trademark) 850, active group equivalent 189 eq/g, manufactured by DIC Corporation), 45.5 g of active ester (trade name HPC-8000-65T, active group equivalent 223 eq/g, manufactured by DIC Corporation), 7.0 g of silica particles (y) (average particle size 0.1 $\mu$m, Seahoster (registered trademark) KE-P10, manufactured by Nippon Shokubai. Co., Ltd.), 900 g 2-butanone (manufactured by FUJIFILM Wako Pure Chemical Corporation), and 10 mg of 4-dimethylaminopyridine (manufactured by Tokyo Chemical Industry Co. Ltd.).

Coating liquid 10:

This coating liquid was prepared by mixing 100 g of acrylate (I), 900 g of 2-butanone (manufactured by FUJIFILM Wako Pure Chemical Corporation), and 200 mg of Omnirad 184 (1-hydroxycyclohexyl phenylketone, manufactured by IGM Resins B.V.).

Coating liquid 11:

This coating liquid was prepared by mixing 99.5 g of polyetherimide (trade name ULTEM (registered trademark) Resin 1010, manufactured by SABIC, glass transition temperature 217°C), 500 mg of calcium carbonate particles 2, and 900 g of N-methylpyrrolidone (manufactured by FUJIFILM Wako Pure Chemical Corporation).

(Example 1)

A15 g portion of polyetherimide resin (trade name ULTEM (registered trademark) Resin 1010, manufactured by SABIC, glass transition temperature 217°C) was dissolved in 85 g of N-methyl-2-pyrrolidone (manufactured by FUJIFILM Wako Pure Chemical Corporation) to prepare an NMP solution of polyetherimide. This was applied to a commercially available polyimide film (thickness 140 $\mu$m) using a #20 metabar and dried in an oven at 150°C for 15 minutes to form a polyetherimide resin layer (resin layer A) on the polyimide film. Then, 2.1 g of terpene phenol resin (trade name TH130, manufactured by Yasuhara Chemical Co., Ltd.), 25 mg of silica particles (x) (average particle size 0.7 $\mu$m, San-Seal (registered trademark) SS-07, manufactured by Tokuyama Corporation), and 12 g of 2-butanone (manufactured by FUJIFILM Wako Pure Chemical Corporation) were mixed to prepare a coating liquid containing a terpene phenol resin. This was applied to the polyetherimide resin layer on the polyimide film using a #4 metabar and dried in an oven at 100°C for 1 minute to form a coat layer (layer B) on the polyetherimide resin layer. The layered sheet of the polyetherimide resin layer and the coat layer was removed from the polyimide film to provide a film for a film capacitor. Evaluation results are given in Table 1.

(Example 2)

Except for mixing 0.70 g, 8 mg, and 14.2 g of terpene phenol resin, silica particles (x), and 2-butanone, respectively, the same procedure as in Example 1 was carried out to produce a film for a film capacitor. Evaluation results are given in Table 1.

(Example 3)

The coating liquid 1 was applied uniformly on the corona-treated surface of the PPS film 1 (resin layer A) using a bar coater in such a manner that a layer B with a film thickness of 0.10 $\mu$m would be formed when cured, and it was dried in a drying furnace at 90°C for a drying time of 1 minute. Subsequently, it was introduced into a UV irradiation device, and the coating film was cured under the conditions of an illuminance of 50 mW/cm$^2$, an exposure dose of 0.1 J/cm$^2$, and an oxygen concentration of 100 ppm to form a layer B, and then the layered sheet composed of the resin layer A and the layer B was wound up to produce a film for a film capacitor. Evaluation results are given in Table 1.

(Example 4)

Except for using the coating liquid 2 instead of the coating liquid 1, the same procedure as in Example 3 was carried out to produce a film for a film capacitor. Evaluation results are given in Table 1.

(Example 5)

Except for using the coating liquid 3 instead of the coating liquid 1 and setting the drying temperature in the drying furnace to 120°C, the same procedure as in Example 3 was carried out to produce a film for a film capacitor. Evaluation results are given in Table 1.

(Example 6)

Except for using the coating liquid 4 instead of the coating liquid 1, the same procedure as in Example 3 was carried out to produce a film for a film capacitor. Evaluation results are given in Table 1.

(Example 7)

Except for using the coating liquid 5 instead of the coating liquid 1, the same procedure as in Example 3 was carried out to produce a film for a film capacitor. Evaluation results are given in Table 1.

(Example 8)

A 150 g portion of polyetherimide resin was dissolved in 850 g of N-methyl-2-pyrrolidone to prepare an NMP solution of polyetherimide. This was applied uniformly to a commercially available polyimide film (thickness 140 μm) using a bar coater in such a manner that a polyetherimide resin layer with a thickness of 3 μm would be formed when dried, and the film was introduced into a drying furnace at 150°C, in which it was dried for a drying time of 5 minutes to form a polyetherimide resin layer (resin layer A) on the polyimide film. The coating liquid 6 was applied uniformly to the resin layer A side surface of the resulting layered sheet in such a manner that a layer B with a thickness of 0.1 μm would be formed when cured, and then it was dried in a drying furnace at 90°C for a drying time of 1 minute. Subsequently, it was introduced into a UV irradiation device, and the coating film was cured under the conditions of an illuminance of 50 mW/cm$^2$, an exposure dose of 0.1 J/cm$^2$, and an oxygen concentration of 100 ppm to form a layer B. Finally, the layered sheet composed of the resin layer A and the layer B was removed from the polyimide film and wound up to produce a film for a film capacitor. Evaluation results are given in Table 2.

(Example 9)

As in Example 8, a polyetherimide resin layer (resin layer A) was formed on a commercially available polyimide film, and the coating liquid 7 was applied to the resin layer A using a bar coater in such a manner that a layer B with a thickness of 0.10 μm would be formed when dried, followed by drying it in a drying furnace at 90°C for a drying time of 1 minute to produce a layer B. Subsequently, the layered sheet composed of the resin layer A and the layer B was removed from the polyimide film and wound up to produce a film for a film capacitor. Evaluation results are given in Table 2.

(Example 10)

Except for using the coating liquid 9 instead of the coating liquid 1, the same procedure as in Example 3 was carried out to produce a film for a film capacitor. Evaluation results are given in Table 2.

(Example 11)

Except for using the PPS film 2 instead of the PPS film 1 and using the coating liquid 10 instead of the coating liquid 1, the same procedure as in Example 3 was carried out to produce a film for a film capacitor. Evaluation results are given in Table 2.

(Example 12)

Except for using the coating liquid 11 instead of the coating liquid 1, setting the drying temperature in the drying furnace to 150°C instead of 90°C, and setting the drying time to 5 minutes instead of 1 minute, the same procedure as in Example 3 was carried out to produce a film for a film capacitor. Evaluation results are given in Table 2.

(Example 13)

A 100 g of cellulose acetate (i) was dissolved in 900 g of methyl ethyl ketone to prepare a methyl ethyl ketone solution of cellulose acetate. This was applied to a commercially available polyimide film (thickness 140 μm) using a bar coater in such a manner that a cellulose acetate layer with a thickness of 3.2 μm would be formed when dried, and the film was introduced into a drying furnace at 100°C, in which it was dried for a drying time of 2 minutes to produce a cellulose acetate resin layer (resin layer A) on the polyimide film. Subsequently, the coating liquid 7 was applied to the resin layer A side surface of the resulting layered sheet in such a manner that a layer B with a thickness of 0.10 μm would be formed when cured, and then it was dried in a drying furnace at 100°C for a drying time of 1 minute to produce a layer B on the resin layer A. The layered sheet composed of the resin layer A and the layer B was removed from the polyimide film and wound up to produce a film for a film capacitor. Evaluation results are given in Table 2.

(Comparative example 1)

Except for omitting the step for forming a layer B after forming a resin layer A, the same procedure as in Example 1 was carried out to produce a film for a film capacitor containing the resin layer A alone. Evaluation results are given in Table 3.

(Comparative example 2)

The coating liquid 8 was applied to the corona-treated surface of the PPS film 1 (resin layer A) using a bar coater in such a manner that a layer B with a thickness of 0.50 $\mu$m would be formed when cured, and it was dried in an oven at 90°C for a drying time of 1 minute to produce a layer B, thus providing a film for a film capacitor. Evaluation results are given in Table 3.

(Comparative example 3)

The PPS film 1 was evaluated as a film for a film capacitor. Evaluation results are given in Table 3.

(Comparative example 4)

The PPS film 2 was evaluated as a film for a film capacitor. Evaluation results are given in Table 3.

(Comparative example 5)

A polyetherimide resin (product name ULTEM 1010-1000-NB (hereinafter abbreviated as 1010-1000)), manufactured by SABIC Innovative Plastics] was prepared for use as a molding material for the resin layer A, and this molding material was dried by leaving it to stand for 12 hours in a dehumidifying hot air dryer (product name Multijet MJ3, manufactured by Matsui Mfg. Co., Ltd.) heated at 150°C. After confirming that the water content of this molding material was 300 ppm or less, the molding material was put in a single-screw extruder with a diameter of 40 mm having a T-die with a width of 900 mm and melt-kneaded, and the melt-kneaded molding material was continuously extruded from the T-die of the single-screw extruder to form a belt-like polyetherimide resin film, thereby forming a polyetherimide resin layer with a length of 1,000 m and a width of 65 cm. The cylinder temperature of the single-screw extruder was adjusted to 360°C to 380°C, the temperature of the T-die adjusted to 385°C, and the temperature of the connecting pipe between the single-screw extruder and the T-die adjusted to 380°C. Furthermore, nitrogen gas, which is an inert gas, was supplied at 18 liters/min as the molding material was fed into the single-screw extruder. The resulting polyetherimide resin layer was sent to pass sequentially on a pair of pressure rollers each having a silicone rubber surface with an arithmetic average roughness (Ra) of 0.44 to 0.47 $\mu$m, metal rollers, designed to work as cooling rollers, each having a convex pattern with an arithmetic average roughness (Ra) of 1.28 $\mu$m on the outer surface and having a temperature of 205°C, and a 6-inch take-up pipe located downstream thereof. It was cooled between each pressure roller and metal roller. As the polyetherimide resin layer was held between the pressure rollers and metal rollers, a plurality of fine uneven portions was formed on both surfaces of the polyetherimide resin layer. The resulting polyetherimide resin layer having fine uneven portions on the surfaces was used as resin layer A, whereas diparaxylylene was vaporized under the conditions of 180°C and 10 Pa and thermally decomposed under the conditions of 680°C and 10 Pa, followed by polymerizing the diradical paraxylylene monomer resulting from the thermal decomposition on the metal roller side surface of the resin layer A under the conditions of 35°C and 10 Pa to form a layer B made of a polyparaxylylene resin. The resulting layered sheet was wound up to provide a film for a film capacitor. Evaluation results are given in Table 3.

(Comparative example 6)

A linear polypropylene resin polymerized with a Ziegler-Natta catalyst that had a mesopentad fraction of 0.98, a melting point of 167°C, and a melt flow rate (MFR) of 2.6 g/10 minutes was fed to a single screw melt-extruder, melt-extruded at 240°C, and filtered through a sintered filter with a 80 $\mu$m pore diameter to remove foreign objects, and the molten polymer was discharged from a T-die and the resulting molten sheet was brought into close contact electrostatically with a casting drum maintained at 95°C to cool and solidify it, thereby providing an unstretched sheet. Subsequently, the sheet was preheated gradually to 145°C by a group of several rollers and, while being maintained at the temperature of 145°C, allowed to pass between rollers with different circumferential speeds to achieve 5.0-fold stretching in the length direction. Subsequently, the film was sent into a tenter, in which it was stretched 8 times in the width direction at a temperature of 165°C and then subjected to the first stage heat treatment and relaxation treatment step designed for performing heat treatment at 130°C while maintaining 8% relaxation in the width direction, followed by the second stage heat treatment step designed for performing heat treatment at 140°C with the film held by clips and tensioned in the width direction. Then, it was passed through a 100°C cooling step and guided out of the tenter, and the clips attached at the ends of the film were removed, followed by winding the film, which had a film thickness of 3.0 $\mu$m, to provide a film for a film capacitor. Evaluation results are given in Table 3.

[Table 1]

[Table 1]

| | | Example 1 | Example 2 | Example 3 | Example 4 | Example 5 | Example 6 | Example 7 |
|---|---|---|---|---|---|---|---|---|
| resin layer A | | polyetherimide resin | polyetherimide resin | polyphenylene sulfide resin | polyphenylene sulfide resin | polyphenylene sulfide resin | polyphenylene sulfide resin | polyphenylene sulfide resin |
| layer B | | terpene phenol resin + silica particles (x) | terpene phenol resin + silica particles (x) | acrylate (I) + cellulose acetate (i) | acrylate (II) + cellulose acetate (i) | acrylate (I) + epoxy resin | acrylic rate (II) + acrylic resin particles | epoxy resin + acrylic resin particles |
| T(F) | ($\mu$m) | 4.7 | 3.5 | 4.6 | 4.6 | 4.6 | 4.6 | 4.6 |
| T(A) | ($\mu$m) | 3.2 | 3.0 | 4.5 | 4.5 | 4.5 | 4.5 | 4.5 |
| T(B) | ($\mu$m) | 1.5 | 0.50 | 0.10 | 0.10 | 0.10 | 0.10 | 0.10 |
| melting point of resin layer A | (°C) | - | - | 285 | 285 | 285 | 285 | 285 |
| glass transition temperature of resin layer A | (°C) | 217 | 217 | 91 | 91 | 91 | 91 | 91 |
| content of oxygen atom O in layer B | (mass%) | 1.7 | 1.7 | 40 | 32 | 33 | 27 | 27 |
| content of silicon atom Si in layer B | (mass%) | 0.030 | 0.030 | 0.0 | 0.0 | 0.0 | 0.0 | 0.0 |
| XA | (-) | 1.3 | 1.3 | 1.4 | 1.4 | 1.4 | 1.4 | 1.4 |
| XB | (-) | 0.62 | 0.62 | 0.52 | 0.63 | 0.62 | 0.68 | 0.79 |
| dynamic friction coefficient $\mu$dab | (-) | 1.1 | 1.0 | 0.80 | 0.80 | 0.84 | 0.85 | 0.86 |
| dynamic friction coefficient $\mu$daa | (-) | > 3.0 | > 3.0 | > 3.0 | > 3.0 | > 3.0 | > 3.0 | > 3.0 |
| dynamic friction coefficient $\mu$dbb | (-) | 0.60 | 0.60 | 0.62 | 0.63 | 0.68 | 0.64 | 0.63 |
| type-b surface | | layer B side surface | layer B side surface | layer B side surface | layer B side surface | layer B side surface | layer B side surface | layer B side surface |
| Sv of type-a surface | (nm) | 950 | 900 | 150 | 140 | 140 | 140 | 140 |

| | | Example 1 | Example 2 | Example 3 | Example 4 | Example 5 | Example 6 | Example 7 |
|---|---|---|---|---|---|---|---|---|
| resin layer A | | polyetherimide resin | polyetherimide resin | polyphenylene sulfide resin | polyphenylene sulfide resin | polyphenylene sulfide resin | polyphenylene sulfide resin | polyphenylene sulfide resin |
| layer B | | terpene phenol resin + silica particles (x) | terpene phenol resin + silica particles (x) | acrylate (I) + cellulose acetate (i) | acrylate (II) + cellulose acetate (i) | acrylate (I) + epoxy resin | acrylic rate (II) + acrylic resin particles | epoxy resin + acrylic resin particles |
| Smr1 of type-a surface | (%) | 9.2 | 9.4 | 11 | 11 | 11 | 11 | 11 |
| Sv of type-b surface | (nm) | 150 | 140 | 50 | 450 | 360 | 300 | 250 |
| Smr1 of type-b surface | (%) | 12 | 12 | 12 | 12 | 12 | 10 | 11 |
| Spk-b/Spk-a | (-) | 6.1 | 6.1 | 2.5 | 2.2 | 2.4 | 2.3 | 2.4 |
| Sv of type-a surface /T (F) | (-) | 0.20 | 0.26 | 0.033 | 0.030 | 0.030 | 0.030 | 0.030 |
| Sv of type-b surface /T (F) | (-) | 0.032 | 0.040 | 0.11 | 0.10 | 0.078 | 0.065 | 0.054 |
| dielectric loss tangent | (%) | 0.15 | 0.18 | 0.13 | 0.13 | 0.14 | 0.13 | 0.14 |
| whether 2 or more mutually incompatible components contained in layer B | (-) | contained | contained | contained | contained | contained | contained | contained |
| SH defect rate | (%) | 17 | 18 | 14 | 15 | 15 | 15 | 19 |
| evaluation for self-healing | (-) | A | A | S | S | S | S | A |
| dynamic friction coefficient $\mu$M | (-) | 1.1 | 1.0 | 0.83 | 0.84 | 0.85 | 0.86 | 0.87 |
| evaluation for processability | (-) | B | B | A | A | A | A | A |
| evaluation for film's dielectric breakdown voltage at 150°C | (-) | B | B | S | S | S | A | A |

(continued)

| | resin layer A | layer B | film capacitor characteristics (-) |
|---|---|---|---|
| Example 1 | polyetherimide resin | terpene phenol resin + silica particles (x) | - |
| Example 2 | polyetherimide resin | terpene phenol resin + silica particles (x) | - |
| Example 3 | polyphenylene sulfide resin | acrylate (I) + cellulose acetate (i) | S |
| Example 4 | polyphenylene sulfide resin | acrylate (II) + cellulose acetate (i) | S |
| Example 5 | polyphenylene sulfide resin | acrylate (I) + epoxy resin | S |
| Example 6 | polyphenylene sulfide resin | acrylic rate (II) + acrylic resin particles | A |
| Example 7 | polyphenylene sulfide resin | epoxy resin + acrylic resin particles | A |

[Table 2]

[Table 2]

| | | Example 8 | Example 9 | Example 10 | Example 11 | Example 12 | Example 13 |
|---|---|---|---|---|---|---|---|
| resin layer A | | polyetherimide resin | polyetherimide resin | polyphenylene sulfide resin | polyphenylene sulfide resin +calcium carbonate particles 1 | polyphenylene sulfide resin | cellulose acetate (i) |
| layer B | | acrylate (I) + terpene phenol resin | acrylic resin + cellulose acetate (i) | epoxy resin + silica particles (y) | acrylate (I) | polyetherimide resin + calcium carbonate particles 2 | acrylic resin + cellulose acetate (i) |
| T(F) | (µm) | 3.0 | 3.3 | 4.6 | 4.7 | 5.0 | 3.3 |
| T(A) | (µm) | 2.9 | 3.2 | 4.5 | 4.6 | 4.5 | 3.2 |
| T(B) | (µm) | 0.10 | 0.10 | 0.10 | 0.10 | 0.10 | 0.10 |
| melting point of resin layer A | (°C) | - | - | 285 | 285 | 285 | 230 |
| glass transition temperature of resin layer A | (°C) | 217 | 217 | 91 | 91 | 91 | 170 |
| content of oxygen atom O in layer B | (mass%) | 25 | 32 | 24 | 40 | 19 | 32 |
| content of silicon atom Si in layer B | (mass%) | 0.0 | 0.0 | 3.2 | 0.0 | 0.0 | 0.0 |
| XA | (-) | 1.3 | 1.3 | 1.4 | 1.4 | 1.4 | 0.60 |
| XB | (-) | 0.60 | 0.60 | 0.78 | 0.52 | 1.3 | 0.60 |
| dynamic friction coefficient µdab | (-) | 1.1 | 0.94 | 0.55 | 0.80 | 1.1 | 0.90 |
| dynamic friction coefficient µda | (-) | > 3.0 | > 3.0 | > 3.0 | 0.90 | > 3.0 | > 3.0 |
| dynamic friction coefficient µdbb | (-) | 0.80 | 0.60 | 0.50 | 0.60 | 1.0 | 0.70 |
| type-b surface | | layer B side surface | layer B side surface | layer B side surface | resin layer A side surface | layer B side surface | layer B side surface |

| | | Example 8 | Example 9 | Example 10 | Example 11 | Example 12 | Example 13 |
|---|---|---|---|---|---|---|---|
| resin layer A | | polyetherimide resin | polyetherimide resin | polyphenylene sulfide resin | polyphenylene sulfide resin +calcium carbonate particles 1 | polyphenylene sulfide resin | cellulose acetate (i) |
| layer B | | acrylate (l) + terpene phenol resin | acrylic resin + cellulose acetate (i) | epoxy resin + silica particles (y) | acrylate (l) | polyetherimide resin + calcium carbonate particles 2 | acrylic resin + cellulose acetate (i) |
| Sv of type-a surface | (nm) | 700 | 680 | 200 | 1500 | 150 | 700 |
| Smr1 of type-a surface | (%) | 9.2 | 9.2 | 11 | 11 | 11 | 12 |
| Sv of type-b surface | (nm) | 540 | 320 | 330 | 800 | 210 | 300 |
| Smr1 of type-b surface | (%) | 13 | 10 | 14 | 10 | 10 | 10 |
| Spk-b/Spk-a | (-) | 2.1 | 2.0 | 8.2 | 1.1 | 1.4 | 2.1 |
| Sv of type-a surface /T(F) | (-) | 0.23 | 0.21 | 0.043 | 0.32 | 0.030 | 0.21 |
| Sv of type-b surface /T(F) | (-) | 0.18 | 0.10 | 0.072 | 0.17 | 0.042 | 0.090 |
| dielectric loss tangent | (%) | 0.32 | 0.51 | 0.42 | 0.13 | 0.16 | 5.0 |
| whether 2 or more mutually incompatible components contained in layer B | (-) | contained | contained | contained | not contained | contained | contained |
| SH defect rate | (%) | 10 | 13 | 23 | 19 | 26 | 13 |
| evaluation for self-healing | (-) | S | S | B | A | B | S |
| dynamic friction coefficient $\mu$M | (-) | 1.1 | 1.0 | 0.60 | 1.0 | 1.2 | 0.90 |
| evaluation for processability | (-) | B | B | S | B | B | A |
| evaluation for film's dielectric breakdown voltage | (-) | B | B | A | B | A | C |
| film capacitor characteristics | (-) | A | B | B | A | B | C |

[Table 3]

[Table 3]

| | | Comparative example 1 | Comparative example 2 | Comparative example 3 | Comparative example 4 | Comparative example 5 | Comparative example 6 |
|---|---|---|---|---|---|---|---|
| resin layer A | | polyetherimide resin | polyphenylene sulfide resin | polyphenylene sulfide resin | polyphenylene sulfide resin + calcium carbonate particles 1 | polyetherimide resin | polypropylene resin |
| layer B | | none | nitrile butadiene rubber +calcium carbonate particles 2 | none | none | polyparaxylylene resin | none |
| T(F) | (μm) | 3.3 | 5.0 | 4.5 | 4.6 | 4.6 | 3.0 |
| T(A) | (μm) | 3.3 | 4.5 | 4.5 | 4.6 | 2.8 | 3.0 |
| T(B) | (μm) | - | 0.50 | - | - | 0.10 | - |
| melting point of resin layer A | (°C) | - | 285 | 285 | 285 | - | 165 |
| glass transition temperature of resin layer A | (°C) | 217 | 91 | 91 | 91 | 217 | - |
| content of oxygen atom O in layer B | (mass%) | - | 0.0 | - | - | 0.0 | - |
| content of silicon atom Si in layer B | (mass%) | - | 0.0 | - | - | 0.0 | - |
| XA | (-) | 1.3 | 1.4 | 1.4 | 1.4 | 1.4 | 0.50 |
| XB | (-) | - | 0.91 | - | - | 1.0 | - |
| dynamic friction coefficient μdab | (-) | > 3.0 | 1.4 | > 3.0 | 0.70 | 0.50 | 0.44 |
| dynamic friction coefficient μda | (-) | > 3.0 | > 3.0 | > 3.0 | 0.70 | 1.3 | 0.45 |
| dynamic friction coefficient μdbb | (-) | > 3.0 | 1.0 | > 3.0 | 0.70 | 0.30 | 0.43 |
| type-b surface | | - | layer B side surface | - | - | layer B side surface | layer B side surface |
| Sv of type-a surface | (nm) | 1500 | 150 | 150 | 1500 | 700 | 220 |

EP 4 129 654 A1

| | | Comparative example 1 | Comparative example 2 | Comparative example 3 | Comparative example 4 | Comparative example 5 | Comparative example 6 |
|---|---|---|---|---|---|---|---|
| resin layer A | | polyetherimide resin | polyphenylene sulfide resin | polyphenylene sulfide resin | polyphenylene sulfide resin + calcium carbonate particles 1 | polyetherimide resin | polypropylene resin |
| layer B | | none | nitrile butadiene rubber +calcium carbonate particles 2 | none | none | polyparaxylylene resin | none |
| Smr1 of type-a surface | (%) | 17 | 12 | 12 | 10 | 10 | 10 |
| Sv of type-b surface | (nm) | 120 | 150.0 | 160 | 800 | 300 | 250 |
| Smr1 of type-b surface | (%) | 6.8 | 11 | 12 | 10 | 10 | 10 |
| Spk-b/Spk-a | (-) | 1.3 | 1.4 | 1.0 | 1.0 | 1.0 | 1.1 |
| Sv of type-a surface /T(F) | (-) | 0.45 | 0.030 | 0.033 | 0.33 | 0.15 | 0.073 |
| Sv of type-b surface /T(F) | (-) | 0.036 | 0.030 | 0.036 | 0.17 | 0.065 | 0.083 |
| dielectric loss tangent | (%) | 0.20 | 0.15 | 0.10 | 0.13 | 0.30 | 0.050 |
| whether 2 or more mutually incompatible components contained in layer B | (-) | - | contained | not contained | - | not contained | - |
| SH defect rate | (%) | 24 | 35 | 60 | 58 | 32 | 0 |
| evaluation for self-healing | (-) | B | C | C | c | c | s |
| dynamic friction coefficient $\mu$M | (-) | > 3.0 | 1.6 | > 3.0 | 0.80 | 0.50 | 0.45 |
| evaluation for processability | (-) | C | C | c | A | S | S |
| evaluation for film's dielectric breakdown voltage | (-) | B | A | A | B | S | D |
| film capacitor characteristics | (-) | - | D | D | D | D | D |

EP 4 129 654 A1

It is noted that in Examples 1 and 2 and Comparative example 1, the film formed was in the form of a small sheet and did not have a sufficient length for producing a capacitor element. Therefore, evaluation of capacitor element processing and film capacitor characteristics was not performed.

INDUSTRIAL APPLICABILITY

The film for a film capacitor according to the present invention can serve for various applications such as packaging applications, tape applications, cable wrapping, and electrical applications such as capacitors, especially for high voltage capacitors that require withstand voltage and reliability at high temperatures.

**Claims**

1. A film for a film capacitor comprising a resin layer A having a melting point of 180°C or higher and/or a glass transition temperature of 130°C or higher and a layer B having a thickness smaller than that of the resin layer A and disposed at least as either of the outermost layers of the film, wherein the layer B has an oxygen atom content of 1.0% by mass or more and both of the relations $\mu$daa > $\mu$dab and $\mu$dab ≤ 1.2 hold where $\mu$daa is the dynamic friction coefficient between either of the two outermost layer surfaces, referred to as type-a surface, and the same type of outermost layer surface, i.e. type-a surface, and $\mu$dab is the dynamic friction coefficient between the type-a surface and the other outermost layer surface, referred to as type-b surface, with the dynamic friction coefficient between two type-a surfaces being larger than that between two type-b surfaces.

2. A film for a film capacitor comprising a resin layer A having a melting point of 180°C or higher and/or a glass transition temperature of 130°C or higher and a layer B having a thickness smaller than that of the resin layer A and being disposed at least as either of the outermost layers of the film, wherein the layer B has an oxygen atom content of 1.0% by mass or more.

3. The film for a film capacitor as set forth in either claim 1 or 2, wherein the dielectric loss tangent is 2.0% or less.

4. The film for a film capacitor as set forth in any one of claims 1 to 3, wherein the content of the silicon atom Si contained in the layer B is 27% by mass or less.

5. The film for a film capacitor as set forth in any one of claims 1 to 4, wherein the layer B satisfies the requirement (i) given below:
   requirement (i): the value of XB calculated by the formula (I) given below from the atomic fractions of the hydrogen atom H, carbon atom C, sulfur atom S, silicon atom Si, nitrogen atom N, and oxygen atom O contained in the layer B is 0.90 or less,

formula (I)   XB = (atomic fraction of carbon atom C in the layer B + atomic fraction of nitrogen atom N in the layer B + atomic fraction of sulfur atom S in the layer B + atomic fraction of silicon atom Si in the layer B ) / (atomic fraction of hydrogen atom H in the layer B + atomic fraction of oxygen atom O in the layer B).

6. The film for a film capacitor as set forth in any one of claims 1 to 5, wherein at least either of the outermost layer surfaces satisfies the relation Smr1 ≥ 12% where Smr1 is the percentage of surface at the intersection of core surface maximum height and areal material ratio curve.

7. The film for a film capacitor as set forth in any one of claims 1 to 6, wherein the ratio between reduced peak height on the type-a surface, referred to as Spk-a, and reduced peak height on the type-b surface, referred to as Spk-b, satisfies the relation Spk-b/Spk-a ≥ 2.0, and also that peak material portion on the type-b surface , referred to as Smr1-b, satisfies the relation Smr1-b ≥ 12%.

8. The film for a film capacitor as set forth in any one of claims 1 to 7, wherein each of the outermost layer surfaces thereof satisfies the relation Sv/T(F) < 0.30 where T(F) is a film thickness and Sv is the maximum valley depth in each outermost layer surface.

9. The film for a film capacitor as set forth in any one of claims 1 to 8, wherein the layer B contains two or more components that are incompatible with each other.

10. The film for a film capacitor as set forth in any one of claims 1 to 9, wherein at least one resin selected from polyphenylene sulfide resin, polyetherimide resin, polyphenyl sulfone resin, and polyethersulfone resin is contained in the resin layer A and accounts for 50% by mass or more and 100% by mass or less therein.

11. The film for a film capacitor as set forth in any one of claims 1 to 10, wherein at least one resin selected from acrylic resin, epoxy resin, cellulose derivative, and polyester resin is contained in the layer B and accounts for 50% by mass or more and 100% by mass or less therein.

12. A metal layer laminated film for a film capacitor comprising the film for a film capacitor as set forth in any one of claims 1 to 11 and a metal layer covering at least either surface thereof.

13. The metal layer laminated film for a film capacitor as set forth in claim 12 having the resin layer A, the layer B, and the metal layer in this order.

14. The metal layer laminated film for a film capacitor as set forth in claim 13, wherein the layer B exists only on one side of the resin layer A with the metal layer existing on the layer B side and also wherein the type-b surface is located on the layer B side when looked from the resin layer A where, of the two outermost layer surfaces, the type-a surface is the one such that the dynamic friction coefficient between two type-a surfaces is larger than that between two type-b surfaces.

15. A film capacitor comprising the metal layer laminated film for a film capacitor as set forth in any one of in claims 12 to 14.

## INTERNATIONAL SEARCH REPORT

International application No.

PCT/JP2021/012638

### A. CLASSIFICATION OF SUBJECT MATTER

B32B 27/00(2006.01)i; C08J 5/18(2006.01)i; H01G 4/18(2006.01)i; H01G 4/32(2006.01)i; B32B 7/02(2019.01)i; B32B 7/027(2019.01)i; C08J 7/04(2020.01)i

FI: H01G4/32 511L; B32B7/027; B32B7/02; B32B27/00 Z; C08J7/04 Z CFG; C08J5/18 CFG; H01G4/18; H01G4/32 511K

According to International Patent Classification (IPC) or to both national classification and IPC

### B. FIELDS SEARCHED

Minimum documentation searched (classification system followed by classification symbols)

B32B27/00; C08J5/18; H01G4/18; H01G4/32; B32B7/02; B32B7/027; C08J7/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 4-219236 A (TORAY INDUSTRIES, INC.) 10 August 1992 (1992-08-10) paragraphs [0060]-[0066] | 1–15 |
| X | US 2017/0062144 A1 (GENERAL ELECTRIC COMPANY) 02 March 2017 (2017-03-02) paragraphs [0042], [0055], [0059]-[0060], fig. 4 | 1–15 |
| X | JP 2004-103787 A (TORAY INDUSTRIES, INC.) 02 April 2004 (2004-04-02) paragraphs [0021], [0042], [0057], [0066], [0070]-[0076] | 1–15 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 June 2021 (08.06.2021) | 22 June 2021 (22.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

32

**INTERNATIONAL SEARCH REPORT**
Information on patent family members

International application No.

PCT/JP2021/012638

| Patent Documents referred in the Report | Publication Date | Patent Family | Publication Date |
|---|---|---|---|
| JP 4-219236 A | 10 Aug. 1992 | (Family: none) | |
| US 2017/0062144 A1 | 02 Mar. 2017 | (Family: none) | |
| JP 2004-103787 A | 02 Apr. 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007300126 A
- JP 2018163950 A
- WO 2007080757 A